# EUROPEAN PATENT APPLICATION

(11) **EP 4 769 749 A1**
(43) Date of publication of application: **01.07.2026**
(21) Application number: 23962918.1
(22) Date of filing: 29.12.2023
(51) Int. Cl.: H01M 50/342

(54) **BATTERY CELL, BATTERY AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); QUAN, Chao, Ningde, Fujian 352100 (CN); GU, Mingguang, Ningde, Fujian 352100 (CN); LIU, Sike, Ningde, Fujian 352100 (CN); LI, Yao, Ningde, Fujian 352100 (CN); LI, Quankun, Ningde, Fujian 352100 (CN); GAN, Jiuqiang, Ningde, Fujian 352100 (CN); HUANG, Xiuxue, Ningde, Fujian 352100 (CN); CHEN, Weike, Ningde, Fujian 352100 (CN); LI, Wei, Ningde, Fujian 352100 (CN)
(74) Representative: Gong, Jinping
(86) International application number: PCT/CN2023/143604
(87) International publication number: WO 2025/138244

(57) **Abstract**

The present application provides a battery cell, a battery and an electrical device, and relates to the technical field of batteries. The battery cell includes a shell and a pressure relief component; the shell includes a first wall portion; the pressure relief component is arranged on the first wall portion, a first weak portion of the pressure relief component defines at least one predetermined pressure relief region, and the pressure relief component is configured to be capable of rupturing along at least part of the first weak portion when the battery cell is subjected to pressure relief; in the width direction of the first wall portion, the size of the first wall portion is W, the first weak portion includes at least one first weak section, and the area of the cross section, perpendicular to an extension direction, of the first weak section is S₁, 10mm≤W≤100mm, 0.006mm²≤S₁≤0.15mm². The risk of liquid leakage caused by the phenomenon that the pressure relief component is prematurely actuated or ruptures due to fatigue and the like after the battery cell is used for a long time can be reduced, the risks of bursting, explosion and the like of the shell of the battery cell caused by untimely pressure relief of the pressure relief component can be further reduced, and the operational reliability of the battery cell can be improved.

## Description

### TECHNICAL FIELD

The present application relates to the technical field of batteries, and in particular, to a battery cell, a battery, and an electrical device.

### BACKGROUND

Batteries are widely used in new energy vehicles, electronic devices and other fields. With the increasing demand for batteries, higher requirements are put forward for the reliability of batteries.

In battery technology, pressure relief components of battery cells are one of the important factors affecting the reliability of the battery cells. The pressure relief components are configured to relieve the pressure inside the battery cells, which can relieve the pressure inside the battery cells when the pressure or temperature inside the battery cells reaches a threshold. However, after multiple cycles and long-term use of the battery pcells, the pressure relief components are easily prematurely actuated to perform pressure relief or rupture due to fatigue, reducing the reliability of the battery cells.

### SUMMARY OF THE INVENTION

Embodiments of the present application provides a battery cell, a battery and an electrical device, aiming to improve reliability of the battery cell.

In a first aspect, an embodiment of the present application provides a battery cell, which includes a shell and a pressure relief component; the shell includes a first wall portion; the pressure relief component is arranged on the first wall portion and includes a first weak portion which defines at least one predetermined pressure relief region, and the pressure relief component is configured to be capable of rupturing along at least part of the first weak portion when the battery cell is subjected to pressure relief; in the width direction of the first wall portion, the size of the first wall portion is W, the first weak portion includes at least one first weak section, and the area of the cross section, perpendicular to an extension direction, of the first weak section is S1, the followings are met: 10mm≤W≤100mm, 0.006mm²≤S₁≤0.15mm².

In the above technical solution, the pressure relief component is arranged on the first wall portion of the shell and includes the first weak portion which can rupture when the battery cell is subjected to pressure relief so as to relieve pressure in the battery cell, and therefore, the problems of explosion, fire and the like caused by excessively high pressure in the battery cell are reduced. The size of the first wall portion in the width direction is 10-100 mm, the size of the first wall portion in the width direction is set to be larger than or equal to 10 mm so as to relieve the phenomenon that bursting pressure for the pressure relief component to perform pressure relief on the battery cell is excessively high due to excessively high pressure bearing capability of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved. The size of the first wall portion in the width direction is set to be smaller than or equal to 100 mm so as to reduce the deformation of the first weak section when an expansion force generated by expansion of the battery cell in the use process acts on the pressure relief component, then the phenomenon that the structural strength is reduced due to excessively large deformation of the first weak portion of the pressure relief component can be further relieved, thereby further reducing the risk of liquid leakage caused by the phenomenon that the pressure relief component is prematurely actuated or ruptures due to fatigue and the like on the first weak portion after the battery cell is used for a long time, further improving the use stability of the pressure relief component, and accordingly further prolonging the service life of the battery cell and improving the operational reliability of the battery cell. The area of the cross section, perpendicular to the extension direction, of the first weak section is 0.006mm² to 0.15mm², the area of the cross section, perpendicular to the extension direction, of the first weak section is set to be larger than or equal to 0.006mm² so as to reduce the deformation of the first weak section when the expansion force generated by expansion of the battery cell in the use process acts on the pressure relief component, then the phenomenon that the structural strength of the first weak portion of the pressure relief component is reduced due to excessively large deformation can be relieved, thereby further reducing the risk of liquid leakage caused by the phenomenon that the pressure relief component is prematurely actuated or ruptures due to fatigue or the like on the first weak portion after the battery cell is used for a long time, further improving the use stability of the pressure relief component, and accordingly further prolonging the service life of the battery cell and improving the operational reliability of the battery cell. The area of the cross section, perpendicular to the extension direction, of the first weak section is set to be smaller than or equal to 0.15 mm² so as to relieve the phenomenon that the bursting pressure for the pressure relief component to perform pressure relief on the battery cell is excessively high due to excessively high pressure bearing capacity of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved.

In some embodiments of the present application in the first aspect, 20mm≤W≤80mm, 0.01 mm²≤S₁≤0.1mm².

In the above technical solution, the size of the first wall portion in the width direction is further defined to be 20-80 mm, the size of the first wall portion in the width direction is set to be larger than or equal to 20 mm so as to further relieve the phenomenon that bursting pressure for the pressure relief component to perform pressure relief on the battery cell is excessively high due to excessively high pressure bearing capability of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved. The size of the first wall portion in the width direction is set to be smaller than or equal to 80 mm so as to reduce the deformation of the first weak section when the expansion force generated by expansion of the battery cell in the use process acts on the pressure relief component, then the phenomenon that the structural strength is reduced due to excessively large deformation of the first weak portion of the pressure relief component can be further relieved, thereby further reducing the risk of liquid leakage caused by the phenomenon that the pressure relief component is prematurely actuated or ruptures due to fatigue and the like on the first weak portion after the battery cell is used for a long time, further improving the use stability of the pressure relief component, and accordingly further prolonging the service life of the battery cell and improving the operational reliability of the battery cell. The area of the cross section, perpendicular to the extension direction, of the first weak section is further defined to be 0.01mm² to 0.1mm², the area of the cross section, perpendicular to the extension direction, of the first weak section is set to be larger than or equal to 0.01 mm² so as to further reduce the deformation of the first weak section when the expansion force generated by expansion of the battery cell in the use process acts on the pressure relief component, then the phenomenon that the structural strength of the first weak portion of the pressure relief component is reduced due to excessively large deformation can be relieved, thereby further reducing the risk of liquid leakage caused by the phenomenon that the pressure relief component is prematurely actuated or ruptures due to fatigue or the like on the first weak portion after the battery cell is used for a long time, further improving the use stability of the pressure relief component, and accordingly further prolonging the service life of the battery cell and improving the operational reliability of the battery cell. The area of the cross section, perpendicular to the extension direction, of the first weak section is set to be smaller than or equal to 0.1 mm² so as to relieve the phenomenon that the bursting pressure for the pressure relief component to perform pressure relief on the battery cell is excessively high due to excessively high pressure bearing capacity of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved.

In some embodiments of the present application in the first aspect, the pressure relief component is provided with a first groove which includes at least one groove section, the pressure relief component forms at least one first weak section in an area provided with the groove section, the width of the groove bottom surface of the groove section is A and its unit is mm, the thickness of the first weak section is H and its unit is mm, A and H meet: S₁=A×H; 0.1mm≤A≤0.3mm, 0.06mm≤H≤0.5mm.

In the above technical solution, the area S₁ of the cross section, perpendicular to the extension direction, of the first weak section of the first weak portion is the product of the width A of the groove bottom surface of the groove section and the thickness H of the first weak portion, the width A of the groove bottom surface of the groove section is set to be 0.1 mm to 0.3 mm, and the thickness H of the first weak section is set to be 0.06 mm to 0.5 mm; the width A of the groove bottom surface of the groove section is set to be greater than or equal to 0.1 mm, and the thickness H of the first weak section is set to be greater than or equal to 0.06 mm, so that the concentration degree of stress generated by expansion of the battery cell on the first weak section of the first weak section can be reduced, the absorption effect of a predetermined pressure relief region on the stress can be improved, the strain and the strain amplitude of the first weak section of the pressure relief component can be further reduced, and then the risk of premature actuation or fatigue rupturing of the pressure relief component in the application process of the battery cell can be further reduced. The width A of the groove bottom surface of the groove section is set to be less than or equal to 0.3 mm, and the thickness H of the first weak section is set to be less than or equal to 0.5 mm, so that the bursting pressure for the pressure relief component to perform pressure relief can be reduced, and the risks of rupturing, explosion, fire and the like of the shell of the battery cell caused by untimely pressure relief of the pressure relief component can be further reduced.

In some embodiments of the present application in the first aspect, 0.15mm≤A≤0.25mm; 0.1mm≤H≤0.3mm.

In the above technical solution, the width A of the groove bottom surface of the groove section is set to be greater than or equal to 0.15 mm, and the thickness H of the first weak portion is set to be greater than or equal to 0.1 mm, so that the concentration degree of stress generated by the expansion of the battery cell on the first weak section of the first weak portion can be further reduced, and the absorption effect of the predetermined pressure relief region on the stress can be further improved, thereby further reducing the strain and the strain amplitude of the first weak portion of the pressure relief component, and further reducing the risk that the pressure relief component is prematurely actuated or ruptures due to fatigue when the battery cell is in the use process. The width A of the groove bottom surface of the groove section is set to be less than or equal to 0.25 mm, and the thickness H of the first weak portion is set to be less than or equal to 0.3 mm, so that the bursting pressure for the pressure relief component during pressure relief can be further reduced, and then the risk of bursting, explosion, fire and the like of the shell of the battery cell caused by untimely pressure relief of the pressure relief component can be further reduced.

In some embodiments of the present application in the first aspect, the pressure relief component is provided with a first surface and a second surface which are oppositely arranged in the thickness direction of the first wall portion, the first groove is in a form of multi-stage score grooves, the multi-stage score grooves are sequentially arranged in the direction from the first surface to the second surface; and in two adjacent stages of score grooves, one stage of score groove far away from the first surface is arranged on the groove bottom surface of one stage of score groove close to the first surface.

In the above technical solution, the first groove is arranged to be a stepped groove structure arranged in the thickness direction of the first wall portion, so that the first groove is a groove formed by multiple processing; with such structure, under the condition of forming the first weak portion with the same thickness, on one hand, the depth in single processing of the score grooves can be reduced, the manufacturing difficulty of forming the first weak portion with the same thickness and the requirement on manufacturing devices are reduced, thus the manufacturing cost is reduced, and moreover, the forming force borne by the pressure relief component during single processing in the forming process of the first weak portion can be reduced, which is conducive to reducing the risk of rupturing of the pressure relief component, thereby improving the production quality of the battery cell; and on the other hand, the flowing material form of the first weak portion in the forming process can be improved, the resulted flowing of materials in the forming the first weak portion is facilitated, and the structure consistency of the multi-stage score grooves is improved.

In some embodiments of the present application in the first aspect, the first groove includes three stages of score grooves, and the three stages of score grooves are sequentially arranged in the direction from the first surface to the second surface.

In the above technical solution, the first groove includes the three stages of score grooves, under the condition of forming the first weak portion with the same thickness, the depth in single processing of the score groove can be reduced, the manufacturing difficulty of forming the first weak portion with the same thickness and the requirement on manufacturing devices are reduced, thus the manufacturing cost is reduced, and moreover, the forming force borne by the pressure relief component during single processing of the first weak portion in the forming process can be reduced, which is conducive to reducing the risk of rupturing of the pressure relief component, thereby improving the production quality of the battery cell; on the other hand, the flowing material form of the first weak portion in the forming process can be improved, the resulted flowing of materials in the forming the first weak portion is facilitated, and the structure consistency of the multi-stage score grooves is improved; and the problem that the processing time is increased due to multiple processing for forming the first weak portion is relieved.

In some embodiments of the present application in the first aspect, the pressure relief component further includes a second weak portion which is configured to guide the predetermined pressure relief region to be opened.

In the above technical solution, the second weak portion can guide the predetermined pressure relief region to be opened, so that the opening effect of the predetermined pressure relief region of the pressure relief component can be improved, the pressure relief area of the battery cell after the predetermined pressure relief region is opened can be increased, furthermore, the pressure relief rate of the battery cell in thermal runaway can be increased, thereby reducing the risks of fire explosion, connection failure and the like caused by untimely pressure relief of the battery cell, and improving the operational reliability of the battery cell.

In some embodiments of the present application in the first aspect, the pressure relief component is provided with a second groove, and the pressure relief component forms the second weak portion in the area provided with the second groove.

In the above technical solution, the pressure relief component is provided with the second groove, and the pressure relief component forms the second weak portion in the corresponding area of the second groove; for the battery cell with such structure, the second weak portion is conveniently formed on the pressure relief component, the difficulty of forming the second weak portion on the pressure relief component can be reduced, and the production efficiency of the battery cell can be improved.

In some embodiments of the present application in the first aspect, the second groove is arranged in the surface, facing the interior of the shell, of the pressure relief component.

In the above technical solution, the second groove is arranged in the surface, facing the interior of the shell, of the pressure relief component, which facilitates the predetermined pressure relief region to overturn towards the outer side of the shell around the groove bottom wall of the second groove when being opened, thereby reducing the interference influence of the groove side surface of the second groove on the predetermined pressure relief region in the overturning process, and improving the overturning effect of the predetermined pressure relief region.

In some embodiments of the present application in the first aspect, the pressure relief component is provided with the first surface and the second surface which are oppositely arranged in the thickness direction of the first wall portion; the first groove is formed in the first surface; the pressure relief component forms the first weak portion in the area provided with the first groove; the second groove is formed in the second surface; and the pressure relief component forms the second weak portion in the area provided with the second groove.

In the above technical solution, the first groove and the second groove are arranged in the first surface and the second surface, opposite to each other in the thickness direction of the first wall portion, of the pressure relief component respectively, so that the first groove and the second groove are conveniently processed on the two sides of the pressure relief component in the thickness direction of the first wall portion respectively, and the mutual influence of the first groove and the second groove in the processing process is reduced.

In some embodiments of the present application in the first aspect, the first surface is the surface, deviating from the interior of the shell, of the pressure relief component, and the second surface is the surface, facing the interior of the shell, of the pressure relief component.

In the above technical solution, the first groove and the second groove are arranged in the first surface and the second surface, opposite to each other in the thickness direction of the first wall portion, of the pressure relief component respectively, so that the first groove and the second groove are conveniently processed on the two sides of the pressure relief component in the thickness direction of the first wall portion respectively, and the mutual influence of the first groove and the second groove in the processing process is reduced. The second groove is arranged in the second surface, facing the interior of the shell, of the pressure relief component, which facilitates the predetermined pressure relief region to overturn towards the outer side of the shell around the groove bottom wall of the second groove when being opened, thereby reducing the interference influence of the groove side surface of the second groove on the predetermined pressure relief region in the overturning process, and improving the overturning effect of the predetermined pressure relief region.

In some embodiments of the present application in the first aspect, in the thickness direction of the first wall portion, the projection of the first groove is not in contact with the projection of the second groove.

In the above technical solution, the projection of the first groove in the thickness direction of the first wall portion and the projection of the second groove in the thickness direction of the first wall portion are set to be of non-contact structures, so that on one hand, the mutual influence of the first groove and the second groove in the machining process can be reduced, and on the other hand, the phenomenon that the second weak portion ruptures when the first weak portion ruptures for pressure relief can be relieved, and moreover, the stress influence between the first weak portion and the second weak portion can be reduced.

In some embodiments of the present application in the first aspect, the pressure relief component is provided with the first groove, and the pressure relief component forms the first weak portion in the area provided with the first groove; the first groove includes a first groove section and a second groove section which are interconnected, the pressure relief component forms the first weak section in the area provided with the first groove section, and the pressure relief component forms the first weak section in the corresponding area of the second groove section.

According to the above technical solution, the first groove includes the first groove section and the second groove section, and the first groove section and the second groove section are of interconnected structures, so that on one hand, the pressure relief area of the battery cell can be increased, and thus the pressure relief rate of the battery cell is increased; and on the other hand, the position in which the first groove section and the second groove section are interconnected is weaker, they are easier to rupture to open the predetermined pressure relief region for relieving the pressure inside the battery cell.

In some embodiments of the present application in the first aspect, the first groove includes a third groove section, the first groove section and the third groove section are oppositely arranged, the second groove section is connected to the first groove section and the third groove section, and the pressure relief component forms the first weak section in the corresponding area of the third groove section.

In the above technical solution, the first groove is provided with the first groove section and the third groove section which are oppositely arranged, and the second groove section connected to the first groove section and the third groove section, so that the pressure relief component can rupture along the first groove section, the second groove section and the third groove section when the battery cell is subjected to pressure relief, and the predetermined pressure relief region is opened to relieve the pressure inside the battery cell; and according to the first groove with such structure, the position in which the first groove section intersects with the second groove section and the position in which the second groove section intersects with the third groove section are weaker, so they are easier to rupture to open the predetermined pressure relief region for pressure relief, and the pressure relief area and the pressure relief rate of the battery cell can be further improved.

In some embodiments of the present application in the first aspect, the position in which the second groove section is connected to the first groove section deviates from two ends of the first groove section, and the position in which the second groove section is connected to the third groove section deviates from two ends of the third groove section.

In the above technical solution, if the position in which the second groove section is connected to the first groove section deviates from the two ends of the first groove section, the position in which the first groove section is connected to the second groove section is between the two ends of the first groove section; if the position in which the second groove section is connected to the third groove section deviates from the two ends of the third groove section, the position in which the third groove section is connected to the second groove section is between the two ends of the third groove section, so that the first groove section, the second groove section and the third groove section form a structure similar to an "H" shape, and the predetermined pressure relief regions can be formed on the two sides of the second groove section of the first groove; and the two predetermined areas can be opened for pressure relief in a split manner when the battery cell is subjected to pressure relief, so that the pressure relief effect on the battery cell is further improved, and the pressure relief rate of the battery cell can be effectively improved.

In some embodiments of the present application in the first aspect, the two predetermined pressure relief regions are defined by the first weak portion, and are respectively located on the two sides of the second groove section; and the pressure relief component further includes the second weak portion which is configured to guide the predetermined pressure relief regions to be opened when the first weak portion ruptures, and each predetermined pressure relief region is correspondingly provided with at least one second weak portion.

In the above technical solution, the second weak portion can guide the corresponding predetermined pressure relief region to be opened, and each predetermined pressure relief region is correspondingly provided with at least one second weak portion, so that the opening effect of each predetermined pressure relief region of the pressure relief component can be improved, and the pressure relief area of the battery cell after the predetermined pressure relief regions are opened can be increased, furthermore, the pressure relief rate of the battery cell in thermal runaway can be increased, thereby reducing the risks of fire explosion, connection failure and the like of the battery cell due to untimely pressure relief, and improving the operational reliability of the battery cell.

In some embodiments of the present application in the first aspect, each predetermined pressure relief region is correspondingly provided with one second weak portion; the pressure relief component is provided with the second groove, the pressure relief component forms the second weak portion in the area provided with the second groove, and the first groove is located between two second grooves.

In the above technical solution, the first groove is located between the two second grooves, so that the second grooves can also play a certain role in buffering the first groove, then when the battery cell is subjected to internal and external impact forces and is deformed, the deformation energy of the battery cell can also be absorbed by the second grooves, thus achieving a certain role in protecting the area provided with the first groove of the pressure relief component, further effectively reducing the phenomena of deformation or damage and the like of the area provided with the first groove of the pressure relief component when the battery cell is subjected to internal and external impact forces, and relieving the situation of premature actuation for pressure relief in the use process of the battery cell.

In some embodiments of the present application in the first aspect, the second groove section and the second groove are oppositely arranged in a first direction, and the first groove section and the third groove section are both arranged at intervals with the second groove in the first direction.

In the above technical solution, the second groove section and the second groove are oppositely arranged in the first direction, and the first groove section and the third groove section are both arranged at intervals with the second groove in the first direction, so that the first groove section, the second groove section and the third groove section are all not in contact with the second groove, which not only reduces the mutual influence of the first groove and the second groove in the processing process, but also reduces the phenomenon that the second weak portion ruptures when the first weak portion ruptures for pressure relief, and moreover, the stress influence between the first weak portion and the second weak portion can be reduced.

In some embodiments of the present application in the first aspect, the first wall portion is of a rectangular structure, and the first direction is parallel to the width direction of the first wall portion.

In the above technical solution, if the first direction is parallel to the width direction of the first wall portion, the second groove section and the second groove are oppositely arranged in the width direction of the first wall portion, the first groove section and the third groove section are both arranged at intervals with the second groove in the width direction of the first wall portion, and the first groove section, the second groove section and the third groove section are all not in contact with the second groove in the width direction of the first wall portion, so that the mutual influence of the first groove and the second groove in the processing process can be reduced, the phenomenon that the second weak portion ruptures when the first weak portion ruptures for pressure relief can be reduced, and moreover the stress influence between the first weak portion and the second weak portion can be reduced.

In some embodiments of the present application in the first aspect, the pressure relief component and the first wall portion are integrally formed.

In the above technical solution, the pressure relief component and the first wall portion are arranged into an integrally-formed structure, so that the pressure relief component is of a structure integrated on the first wall portion, namely the pressure relief component is one wall of the shell; correspondingly, the pressure relief component is arranged on the first wall portion; and for the battery cell with such structure, the structural strength of the pressure relief component arranged on the first wall portion can be improved, and moreover, the risks of liquid leakage and the like caused by improper assembly of the pressure relief component and the first wall portion can be reduced.

In some embodiments of the present application in the first aspect, the pressure relief component and the first wall portion are arranged in a split manner; pressure relief holes are formed in the first wall portion; and the pressure relief component is arranged on the wall portion and covers the pressure relief holes.

In the above technical solution, the pressure relief component and the first wall portion are arranged into the split structures, so that the pressure relief component is of the structure arranged on the first wall portion; and for the battery cell with such structure, the difficulty of arranging the pressure relief component on the first wall portion is reduced, and moreover, the processing procedure of the shell and the processing procedure of the pressure relief component can be synchronously carried out, thereby optimizing the production rhythm of the battery cell.

In some embodiments of the present application in the first aspect, the battery cell includes an electrode assembly which is accommodated in the shell, and the first wall portion supports the electrode assembly.

In the above technical solution, the first wall portion supports the electrode assembly, and the pressure relief component is arranged on the first wall portion, which can reduce the risk that substances released during pressure relief of the battery cell act on other electric connection structures, thereby reducing the risk of causing other reliability problems.

In some embodiments of the present application in the first aspect, the battery cell includes an electrode terminal which is arranged on a wall portion, other than the first wall portion, of the shell.

In the above technical solution, the electrode terminal is arranged on a wall portion, other than the first wall portion, of the shell, so that the risk that the substances released during pressure relief of the battery cell act on the electrode terminal is relatively low, and the risk that the battery cell is short-circuited to cause thermal runaway of the battery cell again due to that the substances released during pressure relief of the battery cell act on the electrode terminal to cause electric connection can be reduced.

In some embodiments of the present application in the first aspect, the electrode terminal is arranged on the wall portion, opposite to the first wall portion, of the shell.

In the above technical solution, the electrode terminal is arranged on the wall portion, opposite to the first wall portion, of the shell, so that the distance from the electrode terminal to the pressure relief component is longer, the risk that the substances released during pressure relief of the battery cell act on the electrode terminal can be further reduced, and furthermore, the risk that the battery cell is short-circuited to cause thermal runaway of the battery cell again due to that the substances released during pressure relief of the battery cell act on the electrode terminal to cause electric connection can be reduced.

In some embodiments of the present application in the first aspect, the shell includes a case and end covers, and the case is provided with at least one opening; the end covers are in one-to-one correspondence with the openings, and the end covers are connected to the case and seal the openings; and at least one end cover serves as the first wall portion, or the case includes the first wall portion.

In the above technical solution, the first wall portion of the shell is set as the end cover of the shell for sealing the opening; and for the battery cell with such structure, the pressure relief component is conveniently arranged on the end cover, so that the manufacturing difficulty of the battery cell is reduced, and the production efficiency of the battery cell is improved. The first wall portion of the shell is set as one wall of the shell; and for the battery cell with such structure, the area provided with the pressure relief component of the shell can be far away from the end cover, thereby effectively relieving the phenomenon that stress generated by interconnection of the end cover and the shell acts on the pressure relief component, reducing the influence on the predetermined pressure relief region and the first weak portion of the pressure relief component, further reducing the risk that the pressure relief component ruptures or the structural strength is reduced under the pulling action of the stress, and prolonging the service life of the battery cell and improving the operational reliability of the battery cell.

In some embodiments of the present application in the first aspect, the shell is provided with two openings which are oppositely arranged; and the shell includes two end covers, each end cover is connected to the shell and seals one opening, and the shell includes the first wall portion.

In the above technical solution, the case of the shell is provided with two openings which are oppositely arranged, and the two end covers seal the two openings respectively; and for the battery cell with such structure, it is convenient to assemble the battery cell from two ends of the shell respectively, and the manufacturing difficulty and the assembling difficulty of the battery cell are reduced. The case includes the first wall portion, and the pressure relief component is not arranged on the end cover, so that the risk that the substances released during pressure relief of the battery cell act on other structures of the battery can be reduced, and furthermore, the risk that the battery cell is short-circuited to cause thermal runaway of the battery cell again due to that the substances released during pressure relief of the battery cell act on the electrode terminal to cause electric connection is reduced.

In some embodiments of the present application in the first aspect, the case is provided with one opening, and the wall portion, opposite to the opening, of the case serves as the first wall portion.

In the above technical solution, the wall portion, opposite to the opening, of the case serves as the first wall portion, so that the risk that the substances released during pressure relief of the battery cell act on other structures of the battery can be reduced, and furthermore, the risk that the battery cell is short-circuited to cause thermal runaway of the battery cell again due to that the substances released during pressure relief of the battery cell act on the electrode terminal to cause electric connection is reduced.

In some embodiments of the present application in the first aspect, the materials of the pressure reliefcomponent include a steel material.

In the above technical solution, the materials of the pressure relief component include the steel material. The steel material has the characteristic of high strength, so the pressure relief component made of the steel material has better strength, and under the condition that the bursting pressure of the battery cell is certain, the pressure relief component can be made thinner, so that the size of the pressure relief component is reduced.

In some embodiments of the present application in the first aspect, the steel material is carbon steel or stainless steel.

In the above technical solution, the materials of the pressure relief component include aluminum alloy. The aluminum alloy has the characteristics of light weight and good ductility, so it is easier to process the first groove in the pressure relief component.

In a second aspect, an embodiment of the present application further provides a battery including the abovementioned battery cell.

In a third aspect, an embodiment of the present application further provides an electrical device including the abovementioned battery cell.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 shows a structural schematic diagram of a vehicle provided in some embodiments of the present application;
FIG. 2 is an exploded diagram of a battery provided by some embodiments of the present application;
FIG. 3 is a structural schematic diagram of a battery cell provided by some embodiments of the present application;
FIG. 4 is an exploded diagram of a battery cell provided by some embodiments of the present application;
FIG. 5 is a schematic structural diagram of a pressure relief component provided by some embodiments of the present application;
FIG. 6 is a sectional view of a pressure relief component provided by some embodiments of the present application;
FIG. 7 is an enlarged view of a part B1 in FIG. 6;
FIG. 8 is a bottom view of a shell provided by some embodiments of the present application;
FIG. 9 is a bottom view of a shell provided by yet some other embodiments of the present application;
FIG. 10 is a schematic structural diagram of a case of a shell of a battery cell provided by some embodiments of the present application;
FIG. 11 is a top view of a shell provided by some other embodiments of the present application;
FIG. 12 is a sectional diagram of a direction Q1-Q1 in FIG. 11;
FIG. 13 is an enlarged view of a part B2 in FIG. 12;
FIG. 14 is a sectional diagram of a direction Q2-Q2 in FIG. 11;
FIG. 15 is an enlarged view of a part B3 in FIG. 14;
FIG. 16 is an enlarged view of a part B4 in FIG. 14;
FIG. 17 is a top view of a shell provided by yet some other embodiments of the present application;
FIG. 18 is a sectional diagram of a direction Q3-Q3 in FIG. 17;
FIG. 19 is an enlarged view of a part B5 in FIG. 18;
FIG. 20 is an enlarged diagram of a part B6 in FIG. 18;

Reference numerals: 1000-vehicle; 100-battery; 10-box body; 11-first box body; 12-second box body; 20-battery cell; 21-shell; 21 1-first wall portion; 212-case; 212a-first side wall; 212b-second side wall; 2121-opening; 213-end cover; 22-pressure relief component; 221-first weak portion; 2211-first weak section; 222-first groove; 2221-first groove section; 2222-second groove section; 2223-third groove section; 2224-fourth groove section; 223-first surface; 224-second surface; 222a-first sub-groove; 222a1-first section; 222a2-second section; 222a3-third section; 222b-second sub-groove; 222b1-fourth section; 222b2-fifth section; 222b3-sixth section; 222c-third sub-groove; 222c1-seventh section; 222c2-eighth section; 222c3-ninth section; 225-second groove; 228-second weak portion; 23-electrode assembly; 231-tab; 24-electrode terminal; 25-current collecting member; 200-controller; 300-motor; P-predetermined pressure relief region; X-thickness direction of first wall portion; Y-length direction of first wall portion; and Z-width direction of first wall portion.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearances of the phrase in various places in the specification neither necessarily refer to a same embodiment, nor are independent or alternative embodiments mutually exclusive with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mni_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt metal foam. The metal foam can be nickel foam, copper foam, aluminum foam, alloy foam, etc. When the metal foam is treated as the positive electrode, the positive electrode active material may be not arranged on a surface of the metal foam, and the positive electrode active material may also be arranged. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, it is the metal foil, and aluminum or stainless steel subjected to silver surface treatment, stainless steel, copper, aluminum, nickel, carbon electrode, nickel or titanium and the like may be adopted. The metal foam can be nickel foam, copper foam, aluminum foam, alloy foam, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell 20 that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode, and plays roles in transmitting ions and isolating the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some implementations, the electrode assembly is of a laminated structure.

As an example, a plurality of positive plates and a plurality of negative plates may be provided, and the plurality of positive plates and the plurality of negative plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some embodiments, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

Batteries have the outstanding advantages of high energy density, low environmental pollution, high power density, long service life, wide adaptation range, and small self-discharge coefficient, and are an important part in new energy development today. In the development of battery technology, it is needed to consider many design factors at the same time, such as energy density, cycle life, discharge capacity, charge-discharge rate and other performance parameters, in addition, it is also necessary to consider the reliability of batteries.

In the battery technology, for a general battery cell, in order to reduce the risks of explosion, fire and other problems of the battery cell, a pressure relief component can be set on the battery cell to relieve the pressure inside the battery cell, so as to reduce the risks of explosion, fire and the like of the battery cell and improve the reliability of the battery cell. In related technologies, the pressure relief component is usually formed on a shell by an integrated forming process, that is, integrated on the shell of the battery cell, or connected to a wall portion of the shell by welding, clamping, etc., so that the pressure relief component can be actuated and opened when the pressure or temperature inside the battery cell reaches a threshold so as to relieve the pressure inside the battery cell. However, the battery cell is prone to expanding in the process of use or in the process of charging and discharging, and the expansion force generated by the battery cell will act on the pressure relief component to cause phenomena such as that the pressure relief component is very easy to face tensile deformation, and to make the pressure relief component produce strain and a large strain amplitude, resulting reduction of the structural strength of the pressure relief component of the battery cell, and as a result, the use stability of the pressure relief component is low, the pressure relief component is easily prematurely actuated or ruptures due to fatigue during use, which is not conducive to prolonging the service life and improving the reliability of the battery cell.

In view of above, in order to relieve the problem of premature actuation for pressure relief or fatigue rupturing of the pressure relief component of the battery cell in the use process, an embodiment of the present application provides a battery cell, which includes a shell and a pressure relief component; the shell includes a first wall portion; the pressure relief component is arranged on the first wall portion, and includes a first weak portion which defines at least one predetermined pressure relief region, and the pressure relief component is configured to be capable of rupturing along at least part of the first weak portion when the battery cell is subjected to pressure relief; and in the width direction of the first wall portion, the size of the first wall portion is W, the first weak portion includes at least one first weak section, the area of the cross section, perpendicular to the extension direction, of the first weak section is S₁, the followings are met: 10mm≤W≤100mm, 0.006mm²≤S₁≤0.15mm².

The first wall portion of the shell is provided with the pressure relief component, and the pressure relief component includes the first weak portion which can rupture when the battery cell is subjected to pressure relief so as to relieve the pressure inside the battery cell, and therefore the problems of explosion, fire and the like caused by excessively high pressure in the battery cell can be solved.

The size of the first wall portion in the width direction is 10-100 mm, the size of the first wall portion in the width direction is set to be larger than or equal to 10 mm so as to relieve the phenomenon that bursting pressure for the pressure relief component to perform pressure relief on the battery cell is excessively high due to excessively high pressure bearing capability of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved. The size of the first wall portion in the width direction is set to be smaller than or equal to 100 mm so as to reduce the deformation of the first weak section when an expansion force generated by expansion of the battery cell in the use process acts on the pressure relief component, then the phenomenon that the structural strength is reduced due to excessively large deformation of the first weak portion of the pressure relief component can be further relieved, thereby further reducing the risk of liquid leakage caused by the phenomenon that the pressure relief component is prematurely actuated or ruptures due to fatigue and the like on the first weak portion after the battery cell is used for a long time, further improving the use stability of the pressure relief component, and accordingly further prolonging the service life of the battery cell and improving the operational reliability of the battery cell.

The area of the cross section, perpendicular to the extension direction, of the first weak section is 0.006mm² to 0.15mm², the area of the cross section, perpendicular to the extension direction, of the first weak section is set to be larger than or equal to 0.006mm² so as to reduce the deformation of the first weak section when the expansion force generated by expansion of the battery cell in the use process acts on the pressure relief component, then the phenomenon that the structural strength of the first weak portion of the pressure relief component is reduced due to excessively large deformation can be relieved, thereby further reducing the risk of liquid leakage caused by the phenomenon that the pressure relief component is prematurely actuated or ruptures due to fatigue or the like on the first weak portion after the battery cell is used for a long time, further improving the use stability of the pressure relief component, and accordingly further prolonging the service life of the battery cell and improving the operational reliability of the battery cell. The area of the cross section, perpendicular to the extension direction, of the first weak section is set to be smaller than or equal to 0.15 mm² so as to relieve the phenomenon that the bursting pressure for the pressure relief component to perform pressure relief on the battery cell is excessively high due to excessively high pressure bearing capacity of the first weak section of the first weak portion, and therefore, the risks of bursting, explosion, fire and the like of the shell of the battery cell caused by untimely pressure relief of the pressure relief component can be further reduced, and then the operational reliability of the battery cell can be further effectively improved.

The battery cell disclosed by this embodiment of the present application can be used in electrical devices such as vehicles, ships or aircrafts. The battery cell, the battery and the like disclosed by the present application can form a power system for the electrical device, and therefore the problem that the pressure relief component of the battery cell in the use process is prematurely actuated or ruptures due to fatigue can be relieved, the operational reliability of the battery cell is improved, and the service life of the battery cell is prolonged.

An embodiment of the present application provides an electrical device that uses a battery as a power source, and the electrical device may be but not limited to a mobile phone, a tablet personal computer, a laptop computer, an electric toy, an electric tool, a battery car, an electric vehicle, a ship, a spacecraft, and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiments, for the convenience of illustration, take the vehicle being an electrical device in one embodiment of the present application as an example to illustrate.

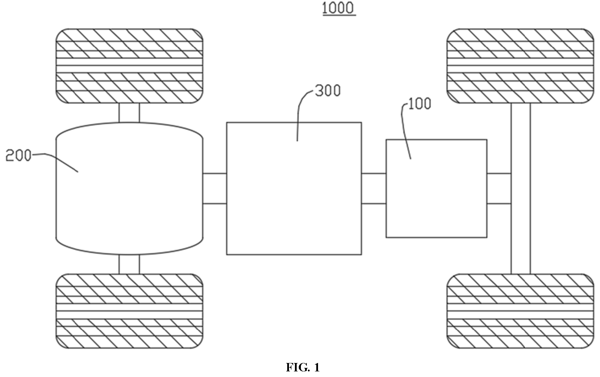

FIG. 1 is referred, and FIG. 1 is a schematic structural diagram of a vehicle 1000 provided by some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, a battery 100 can not only be used as an operating power supply or a use power supply of a vehicle 1000, but also can be used as a driving power supply of the vehicle 1000, and provides driving power for the vehicle 1000 instead of or partially replacing fuel oil or natural gas.

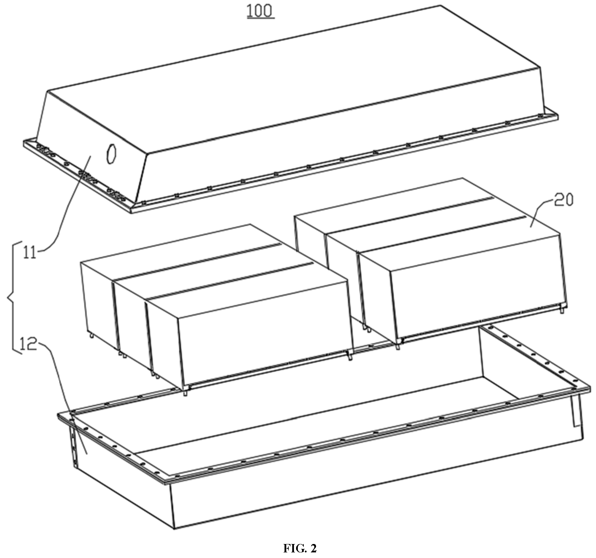

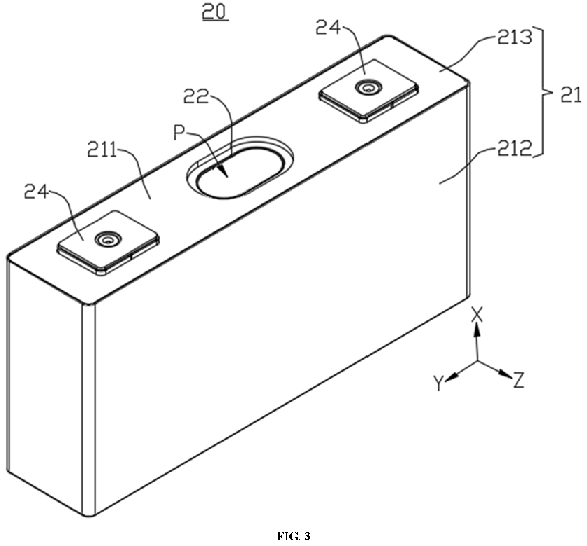

With reference to FIG. 2 and FIG. 3, FIG. 2 is an exploded diagram of a battery 100 provided by some other embodiments of the present application; and FIG. 3 is a schematic structural diagram of a battery cell 20 provided by some other embodiments of the present application. The battery 100 includes a box body 10 and battery cells 20; and the battery cells 20 are accommodated within the box body 10.

where the box body 10 is configured to provide an assembling space for the battery cells 20, and the box body 10 may be of various structures. In some embodiments, the box body 10 may include a first box body 11 and a second box body 12. The first box body 11 and the second box body 12 cover each other, and the first box body 11 and the second box body 12 together define an assembling space for accommodating the battery cell 20. The second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder, a cuboid, or a cube. Exemplarily, in FIG. 2, the box body 10 is in a cuboid shape.

In the battery 100, one battery cell 20 or a plurality of battery cells 20 may be arranged in the box body 10. If a plurality of battery cells 20 are arranged in the box body 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated in the box body 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated in the box body 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 can be a secondary battery or a primary battery, and can also be a lithium-sulfur battery, a sodium-ion battery or a magnesium-ion battery, but not limited thereto. The battery cell 20 can be in a cuboid shape, a cylinder shape, a prism shape or other shapes. Exemplarily, in FIG. 3, the battery cell 20 is of a cuboid structure.

In some embodiments, as shown in FIG. 3, FIG. 4, FIG. 5, FIG. 6 and FIG. 7, an embodiment of the present application provides a battery cell 20, which includes a shell 21 and a pressure relief component 22; the shell 21 includes a first wall portion 211; the pressure relief component 22 is arranged on the first wall portion 211 and includes a first weak portion 221 which defines at least one predetermined pressure relief region P; the pressure relief component 22 is configured to be capable of rupturing along at least part of the first weak portion 221 when performing pressure relief on the battery cell 20; in the width direction Z of the first wall portion, the size of the first wall portion 211 is W, the first weak portion 221 includes at least one first weak section 2211, and the area of the cross section, perpendicular to the extension direction, of the first weak section 2211 is S₁, the followings are met: 10mm≤W≤100mm, 0.006mm²≤S₁≤0.15mm².

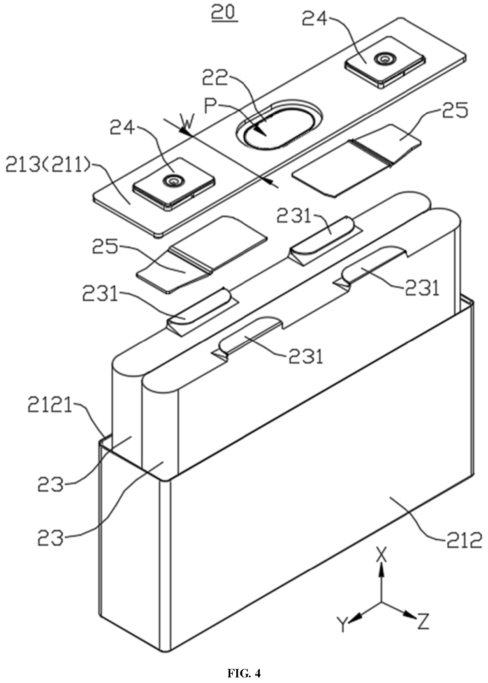

With reference to FIG. 4, the battery cell 20 can also include an electrode assembly 23 which is accommodated in the shell 21; the electrode assembly 23 is a component which is subjected to electrochemical reaction in the battery cell 20; and the electrode assembly 23 can be of various structures, for example, the electrode assembly 23 can be of a wound structure formed by winding a positive electrode plate, a spacer and a negative electrode plate, and can also be of a laminated structure formed by laminating the positive electrode plate, the spacer and the negative electrode plate.

Exemplarily, the spacer is a separator, and the main materials of the separator can be selected from at least one of glass, non-woven fabric, polyethylene, polypropylene and polyvinylidene fluoride.

The battery cell 20 can include one electrode assembly 23 or a plurality of electrode assemblies 23. In FIG. 4, the battery cell 20 includes two electrode assemblies 23 which are arranged in a laminated manner in the thickness direction. The lamination direction of the two electrode assemblies 23 can be the thickness direction of the battery cell 20. Definitely, in some other embodiments, there may be three, four, and five electrode assemblies 23 in the battery cell 20.

In some embodiments, the battery cell 20 further includes an electrolyte which is accommodated in a shell 21. The electrolyte can be an electrolyte solution.

In some embodiments, the shell 21 can include a case 212 and an end cover 213, an accommodating cavity is formed in the case 212 and is configured to accommodate the electrode assemblies 23, and the accommodating cavity is provided with at least one opening 2121, that is, the case 212 is of a hollow structure with the opening 2121 in at least one end, and the end cover 213 covers the opening 2121 of the case 212 and forms a sealed connection with the opening 2121 of the case 212 so as to form a closed space for accommodating the electrode assemblies 23 and the electrolyte.

The first wall portion 211 provided with the pressure relief component 22 can be the end cover 213 of the shell 21, and can also be one wall portion of the case 212 of the shell 21. Exemplarily, in FIG. 3 and FIG. 4, the first wall portion 211 is the end cover 213. Definitely, the structure of the battery cell 20 is not limited thereto, in other embodiments, the first wall portion 211 can also be a wall portion, opposite to the end cover 213, of the case 212, namely, the bottom wall of the case 212; the first wall portion 211 can also be a side wall, which is adjacent to and connected to the end cover 213, of the case 212; and the side wall can be a wall which surrounds the end cover 213 and forms the opening 2121.

When assembling the battery cell 20, the electrode assembly 23 can be firstly placed in the case 212, the electrolyte solution is filled in the case 212, and then the end cover 213 covers the opening 2121 of the case 212, so that the assembling of the battery cell 20 is finished.

The case 212 can be in various shapes, such as cylinder, cuboid or prism structures. The shape of the case 212 can be determined according to the specific shape of the electrode assembly 23. For example, if the electrode assembly 23 is of a cylinder structure, the case 212 of the cylinder structure can be selected; and if the electrode assembly 23 is of a cuboid structure, the case 212 of the cuboid structure can be selected. Definitely, the end cover 213 can be of various structures, for example, the end cover 213 is of a plate-shaped structure or hollow structure with one end opened. In FIG. 3 and FIG. 4, the case 212 is of a cuboid structure, the length direction Y of the first wall portion is the length direction of the battery cell 20, the width direction Z of the first wall portion is the thickness direction of the battery cell 20, and the thickness direction X of the first wall portion is the height direction of the battery cell 20.

Definitely, it is to be understood that the shell 21 is not limited to the above structure, and it can also be of other structures, for example, the shell 21 can include the case 212 and the two end covers 213, the case 212 is of a hollow structure with openings 2121 formed in two opposite ends, one end cover 213 correspondingly covers one opening 2121 of the case 212 and forms sealing connection so as to form a closed space for accommodating the electrode assembly 23 and the electrolyte, that is, the openings 2121 are formed in two opposite sides of the case 212, and the two end covers 213 cover two sides of the case 212 correspondingly so as to close the corresponding openings 2121.

The shell 21 can be made of various materials, such as copper, iron, aluminum, steel or aluminum alloy.

In some embodiments, the battery cell 20 further includes the electrode terminal 24. The electrode terminal 24 can be installed on the shell 21 in an insulated mode, and the electrode terminal 24 is electrically connected to the electrode assembly 23 to output or input electric energy of the battery cell 20.

It is to be noted that the electrode terminal 24 is installed on the shell 21 in an insulated mode, that is, the electrode terminal 24 is not electrically connected to the shell 21.

The battery cell 20 can include one electrode terminal 24 or two electrode terminals 24. Exemplarily, as shown in FIG. 4, the battery cell 20 includes two electrode terminals 24 which are arranged at an interval in the length direction Y of the first wall portion. Each electrode assembly 23 is provided with two tabs 231, and the two tabs 231 are arranged at an interval in the length direction Y of the wall portion and are opposite in polarity; and the two electrode terminals 24 are respectively and electrically connected to the two tabs 231 with opposite polarity of the electrode assembly 23 so as to achieve input or output of a positive electrode and a negative electrode of the battery cell 20.

It is to be noted that one tab 231 of the electrode assembly 23 can be a component formed by mutually laminating and connecting areas, which are not coated with positive electrode active material layers, on the positive electrode plate so as to form a positive electrode tab, and the other tab can be a component formed by mutually laminating and connecting areas, which are not coated with negative electrode active material layers, on the negative electrode plate so as to form a negative electrode tab.

Exemplarily, the electrode terminals 24 can also be made various materials, for example, the electrode terminals 24 can be made of copper, iron, aluminum, steel or aluminum alloy and the like.

The electrode terminals 24 can be arranged at various positions on the shell 21, exemplarily, in FIG. 3 and FIG. 4, the two electrode terminals 24 are arranged on the end cover 213 of the shell 21. Definitely, the structure of the battery cell 20 is not limited thereto, in an embodiment where the battery cell 20 includes the two electrode terminals 24, the two electrode terminals 24 can also be arranged on the case 212 of the shell 21, similarly, one electrode terminal 24 can be arranged on the case 212 of the shell 21, and the other electrode terminal 24 is arranged on the end cover 213 of the shell 21.

In some embodiments, with reference to FIG. 4, the battery cell 20 can also include two current collecting members 25 which are both arranged in the shell 21 and are arranged at an interval in the length direction Y of the first wall portion; each current collecting member 25 is configured to connect one electrode terminal 24 and the tabs 231 with the same polarity in a plurality of electrode assemblies 23 so as to realize electric connection between the electrode terminal 24 and the electrode assemblies 23, thus reducing the assembly difficulty of the tabs 231 and the electrode terminals 24.

Exemplarily, the current collecting members 25 can be made of various materials, for example, the current collecting members 25 can be made of copper, iron, aluminum, steel or aluminum alloy and the like.

In this embodiment of the present application, the pressure relief component 22 plays a role in pressure relief in the battery cell 20, and is configured to relieve the pressure inside the battery cell 20 when the pressure or temperature inside the battery cell 20 reaches a preset value.

The pressure relief component 22 can be of various structures, for example, as shown in FIG. 4, the pressure relief component 22 can be of a structure arranged with the first wall portion 211 of the shell 21 in a split way, and the pressure relief component 22 can also be of a structure that is integrally formed with the first wall portion 211 of the shell 21. When the pressure relief component 22 is of the structure arranged with the first wall portion 211 of the shell 21 in the split way, that is, the first wall portion 211 of the shell 21 is provided with pressure relief holes (not shown in the figure) for installing the pressure relief component 22, the pressure relief component 22 is connected to the first wall portion 211 and covers the pressure relief holes; and the pressure relief component 22 and the first wall portion 211 can be connected in various modes, for example, welding or clamping. When the pressure relief component 22 is of the structure that is integrally formed with the first wall portion 211 of the shell 21, that is, the pressure relief component 22 is one wall of the shell 21, that is, the pressure relief component 22 is integrated on the first wall portion 211 and forms one wall of the shell 21, and correspondingly, the pressure relief component 22 forms a weak structure on the first wall portion 211 and used for rupturing when the battery cell 20 is subjected to pressure relief.

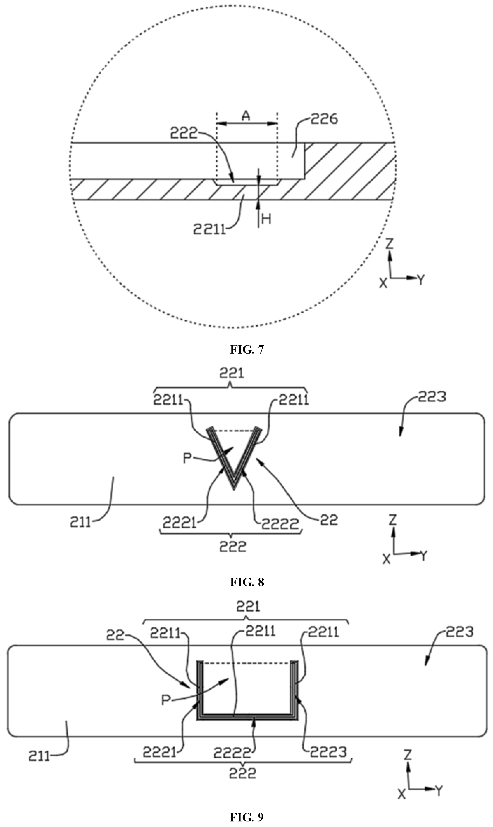

For example, as shown in FIG. 8 and FIG. 9, the pressure relief component 22 is of the structure that is integrally formed with the first wall portion 211, that is, the pressure relief component 22 serves as the first wall portion 211, and the first weak portion 221 and the predetermined pressure relief region P are both formed on the first wall portion 211.

The pressure relief component 22 includes a first weak portion 221, namely the first weak portion 221 is a part of the pressure relief component 22. The first weak portion 221 is an area, with the minimum thickness in the thickness direction X of the first wall portion, of the pressure relief component 22. Therefore, the first weak portion 221 is more likely to rupture as the increase in air pressure inside the battery cell 20 relative to other areas of the pressure relief component 22. The extension track of the first weak portion 221 is a rupturing track of the pressure relief component 22, and the pressure relief component 22 can open the predetermined pressure relief region P after at least part of the first weak portion 221 ruptures, so that the pressure inside the battery cell 20 can be relieved from the predetermined pressure relief region P.

The first weak portion 221 defines at least one predetermined pressure relief region P, namely the predetermined pressure relief region P is a part of the pressure relief component 22. The first weak portion 221 can define one predetermined pressure relief region P. The first weak portion 221 can also define a plurality of predetermined pressure relief regions P, such as two predetermined pressure relief regions P, three predetermined pressure relief regions P, and four predetermined pressure relief regions P.

According to different structural shapes of the first weak portion 221, the forming modes of the predetermined pressure relief region P are different. For example, in some embodiments, the first weak portion 221 forms a closed structure in the extension direction, and the space defined by the first weak portion 221 is the predetermined pressure relief region P. Exemplarily, as shown in FIG. 3 to FIG. 5, if the extension track of the first weak portion 221 is oval, the first weak portion 221 defines an oval predetermined pressure relief region P. In this embodiments, the area S of all the predetermined pressure relief regions P is the area of the area defined by the outer contour of the first weak portion 221. The outer contour of the first weak portion 221 is the contour, closest to the edge 211 of the first wall portion in the width direction of the first weak portion 221.

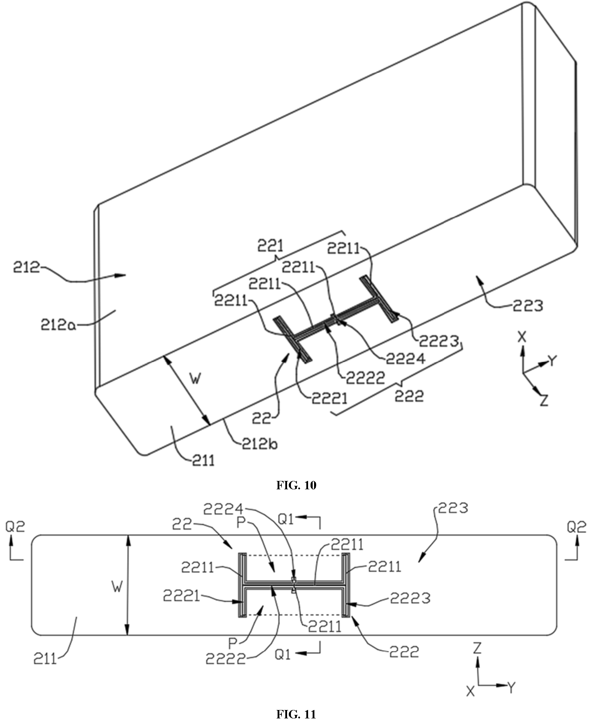

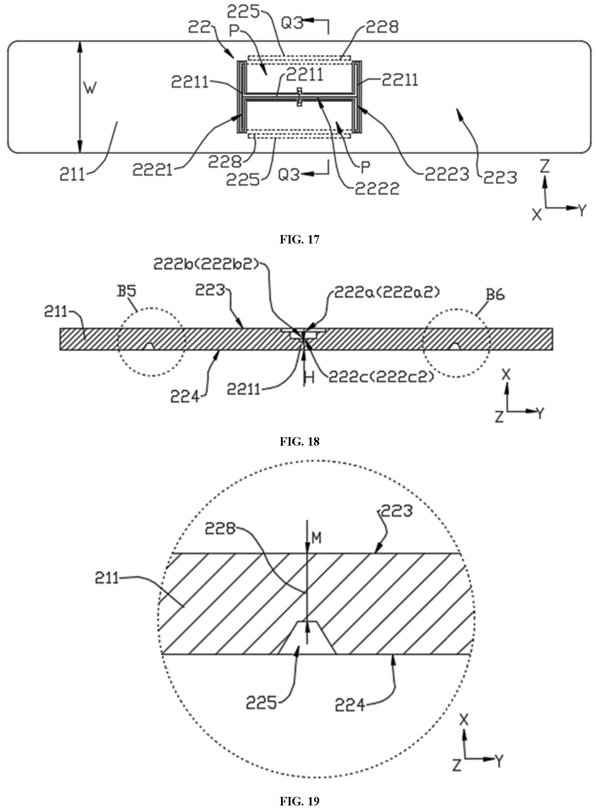

In some other embodiments, in the extension direction of the first weak portion 221, the first weak portion 221 is of a non-closed structure, and the predetermined pressure relief region P is jointly defined by the first weak portion 221 and a connecting line of end portions of the first weak portion 221. It is to be noted that the connecting line of the end portions of the first weak portion 221 is a virtual line. For example, as shown in FIG. 8, in the extension direction of the first weak portion 221, if the first weak portion 221 is V-shaped, the predetermined pressure relief region P is jointly defined by the V-shaped first weak portion 221 and the connecting line of two end portions of the V-shaped first weak portion 221. As shown in FIG. 9, in the extension direction of the first weak portion 221, if the first weak portion 221 is U-shaped, the predetermined pressure relief region P is jointly defined by the U-shaped first weak portion 221 and the connecting line of two end portions of the U-shaped first weak portion 221. In this case, the sum S of the area of all the predetermined pressure relief regions P is the area of the area jointly defined by the outer contour of the first weak portion 221 and the connecting line of the end portions of the first weak portion 221. The dotted line shown in FIG. 8 and FIG. 9 are the connecting line of the end portions of the first weak portion 221. The dotted line shown in FIG. 11 is the connecting line of the end portions of two first weak sections 2211 of the first weak portion 221 in the extension direction, and the two dotted lines and the first weak portions 2211 jointly form two predetermined pressure relief regions P. The dotted line parallel to the second groove 225 in FIG. 17 is the connecting line of the end portions of the two first weak sections 2211 of the first weak portion 221 in the extension direction, and the two dotted lines and the first weak portions 2211 jointly form two predetermined pressure relief regions P.

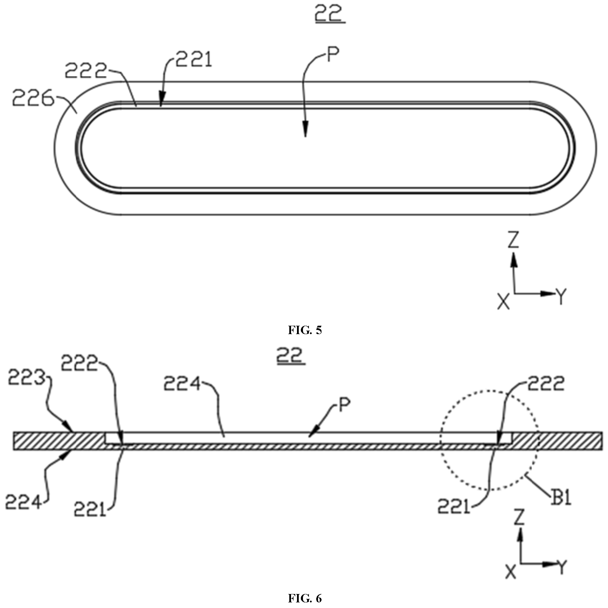

The first weak portion 221 includes at least one first weak section 2211, and it is to be noted that the first weak section 2211 of the first weak portion 221 is of a structure extending along a smooth track, such as a structure extending along a straight line or an arc line, and there can be one or more the first weak section 2211 in the first weak portion 221; and if the first weak portion 221 is of a straight line structure or an arc line structure or an annular structure, the first weak portion 221 includes only one first weak section 2211. If the first weak portion 221 is of a "V"-shaped structure or a "U"-shaped structure or an "H"-shaped structure, the first weak portion 221 includes a plurality of first weak sections 2211. Exemplarily, in FIG. 5, if the first groove 222 is formed in the pressure relief component 22, the first weak portion 221 is formed on the groove bottom wall of the first groove 222, and the first groove 222 is an annular groove, the first weak portion 221 includes only one first weak section 2211. For another example, as shown in FIG. 8, the first groove 222 is formed in the pressure relief component 22, the first weak portion 221 is formed on the groove bottom wall of the first groove 222, the first groove 222 includes a first groove section 2221 and a second groove section 2222 which are interconnected, and thus the V-shaped first groove 222 is formed; and each of the groove bottom wall of the first groove section 2221 and the groove bottom wall of the second groove section 2222 forms one first weak section 2211, so that the first weak portion 221 includes two first weak sections 2211.

As shown in FIG. 9, the first groove 222 is arranged in the pressure relief component 22, the first weak portion 221 is formed on the groove bottom wall of the first groove 222, the first groove 222 includes the first groove section 2221, the second groove section 2222 and a third groove section 2223 which are interconnected, and thus the U-shaped first groove 222 is formed, the first groove section 2221 and the third groove section 2223 are oppositely arranged, and the second groove section 2222 is connected to the first groove section 2221. Each of the groove bottom wall of the first groove section 2221, the groove bottom wall of the second groove section 2222 and the groove bottom wall of the third groove section 2223 forms one first weak section 2211, so that the first weak portion 221 includes three first weak sections 2211.

For another example, in FIG. 10, if the pressure relief component 22 is provided with the first groove 222, the groove bottom wall of the first groove 222 forms the first weak portion 221, the first groove 222 includes the first groove section 2221, the second groove section 2222, the third groove section 2223 and a fourth groove section 2224, in which, the first groove section 2221 and the third groove section 2223 are oppositely arranged, the second groove section 2222 is connected to the first groove section 2221 and the third groove section 2223, the fourth groove section 2224 is located between the first groove section 2221 and the third groove section 2223, and the fourth groove section 2224 is connected to the second groove section 2222, each of the groove bottom wall of the first groove section 2221, the groove bottom wall of the second groove section 2222, the groove bottom wall of the third groove section 2223 and the groove bottom wall of the fourth groove section 2224 forms one first weak section 2211, so that the first weak portion 221 includes four first weak sections 2211.

The area S1 of the cross section, perpendicular to the extension direction, of the first weak section 2211 is the product of the maximum width of the groove bottom surface of the first groove 222 and the minimum residual thickness of the first groove 222, and the minimum residual thickness of the first groove 222 is the thickness of the first weak portion 221.

In the width direction Z of the first wall portion, the size W of the first wall portion 211 can be the maximum size of the first wall portion 211 in the width direction. As shown in FIG. 10, in some embodiments, in the width direction Z of the first wall portion, the shell 21 includes a first side wall 212a and a second side wall 212b which are oppositely arranged, the first side wall 212a and the second side wall 212b are connected to two sides of the first wall portion 211 in the width direction respectively, the size W of the first wall portion 211 in the width direction can be the distance from the outer surface of the first side wall 212a to the outer surface of the second side wall 212b in the width direction Z of the first wall portion.

Exemplarily, W can be 10 mm, 12 mm, 20 mm, 30 mm, 40 mm, 50 mm, 60 mm, 70 mm, 80 mm, 90 mm, 100 mm, etc.

Exemplarily, S₁ can be 0.006 mm², 0.01 mm², 0.0104 mm², 0.015 mm², 0.02 mm², 0.0225 mm², 0.03 mm², 0.04 mm², 0.05 mm2, 0.0575 mm2, 0.06 mm2, 0.07 mm2, 0.075 mm, 0.08 mm², 0.09 mm², 0.1 mm², 0.108 mm², 0.12 mm², 0.15 mm², etc.

In order to make the technical problems, technical solutions and beneficial effects solved by the embodiment of the present application clearer, the following shows further detailed description in combination with Embodiments 1 to 11, and Comparative Embodiments 1 to 4. Obviously, the described examples are only some examples of the present application, not all examples. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

### Embodiment 1

### 1. Preparation of battery cell 20

### 1) Preparation of positive electrode plate

Positive electrode slurry is prepared from a positive electrode active material LiNi_{0.7}Co_{0.1}Mn_{0.1}O₂, a conductive agent Super P and a binder polyvinylidene fluoride (PVDF) in N-methyl pyrrolidone (NMP), in which, the positive electrode slurry contains 50wt% of solid, and the mass ratio of LiNi_{0.7}Co_{0.1}Mn_{0.1}O₂ to Super P to PVDF in the solid component is 8:1:1; and the upper and lower surfaces of an aluminum foil of a current collector are coated with the positive electrode slurry, dried at 85°C, then subjected to cold pressing, trimming, slicing and stripping, and finally dried under a vacuum condition of 85°C for 4 h to obtain the positive electrode plate.

### 2) Preparation of negative electrode plate

Graphite, a conductive agent Super P, a thickener carboxymethyl cellulose (CMC) and a binder Styrene Butadiene Rubber (SBR) are uniformly mixed in deionized water to prepare negative electrode slurry, in which, the negative electrode slurry contains 30wt% of solid, and the mass ratio of graphite to silicon oxide to Super P to CMC to the binder Styrene Butadiene Rubber (SBR) in the solid component is 88:7:3:2; the upper and lower surfaces of the aluminum foil of the current collector are coated with the negative electrode slurry, dried at 85°C, then subjected to cold pressing, trimming, slicing and stripping, and finally dried under a vacuum condition of 120°C for 12 h to prepare a negative electrode plate.

### 3) Preparation of electrolyte

Fully dried electrolyte salt LiPF6 is dissolved in a mixed solvent (the mixed solvent includes Ethylene Carbonate (EC) and diethyl carbonate (DEC) in a mass ratio of 50:50) in an argon atmosphere glove box (H₂O<0.1ppm, O₂<0.1ppm), and uniformly mixed to obtain a liquid electrolyte with the concentration of 1 mol/L.

### 4) Spacer

A 16µm polyethylene film is used as the spacer.

### 5) Preparation of battery cell 20

The positive electrode plate, the spacer and the negative electrode plate are sequentially stacked, the spacer is arranged between the positive electrode plate and the negative electrode plate and is configured to space a positive electrode from a negative electrode; the positive electrode plate, the spacer and the negative electrode plate are wound to form the electrode assembly 23, the electrode assembly 23 is arranged in the aluminum shell 21, the prepared electrolyte is injected into the dried shell 21, and then packaging, standing, formation, shaping, capacity test and the like are performed to complete the preparation of the battery cell 20. The shell 21 of the battery cell 20 is of a cuboid structure, the case 212 of the shell 21 is of a structure with an opening in one end, the wall portion, opposite to the end cover 213, of the case 212 is the first wall portion 211 which is a rectangular wall portion, the pressure relief component 22 is arranged on the first wall portion 211 of the shell 21, and the first wall portion 211 and the pressure relief component 22 are integrally formed. The first groove 222 is formed in the pressure relief component 22 so that the first weak portion 221 is formed in the groove bottom wall of the first groove 222, the first groove 222 is of an H-shaped structure and is in a form of three stages of score grooves, and the first groove 222 is formed in an outer surface of the first wall portion 211. The area S₁ of the cross section, perpendicular to the extension direction, of the first weak section 2211 of the first weak portion 221 of the pressure relief component 22 of the battery cell 20 in the Embodiment 1 is 0.006 mm², and the size W of the first wall portion 211 in the width direction is 100 mm.

The preparation method for the battery cell 20 in the Embodiments 2-11 is same as the Embodiment 1 and is different in that the area S₁ of the cross section, perpendicular to the extension direction, of the first weak section 2211 of the first weak portion 221 is different from the size W of the first wall portion 211 in the width direction.

Fatigue test is carried out on the battery cells 20 in the Embodiments 1 to 7 and the Comparative Embodiments 1 to 4 to obtain the fatigue cycle times of the battery cell 20 in the process of long-term use, and thermal runaway test is carried out on the battery cells 20 to obtain the gas holding duration of the battery cell 20 in thermal runaway, so as to evaluate the reliability of the battery cells 20, as shown in Table 1.

A method for measuring the fatigue times of the battery cell 20 includes:
1) Prepare a special test fixture, specifically, the fixture includes three 10 mm steel plates (a first steel plate, a second steel plate, and a third steel plate), each steel plate can completely cover the large surface of the battery cell 20 (the large surface of the battery cell 20 refers to the outer surface perpendicular to the width direction Z of the first wall portion in the shell 212), the first steel plate and the third steel plate are positioned at two ends of the fixture and are connected and fixed by bolts, the second steel plate is positioned between the first steel plate and the third steel plate, and the second steel plate is restrained by a guide rail and can only translate in the direction perpendicular to the plane of the steel plate.
2) Mount the battery cell 20 between the first steel plate and the second steel plate, place supporting structures between the large surface on one side of the battery cell 20 and the first steel plate and between the large surface on the other side of the battery cell 20 and the second steel plate, in which, the supporting structures can be heat insulation pads or water cooling plates (the material/structure between two adjacent battery cells 20 in an actual battery 100 is kept consistent), the supporting structures can be compressed to provide an expansion space for the battery cell 20 in the charge-discharge cycle aging process; and attach the large surface of the battery cell 20 to the supporting structures, attach the first steel plate to the corresponding supporting structure, attach the second steel plate to the corresponding supporting structure, and arrange a pressure sensor between the second steel plate and the third steel plate.
3) Adjust the position of the second steel plate by a bolt pre-tightening force, thereby realizing adjustment of initial extrusion force of the battery cell 20. One battery cell 20 is fixed in the special test fixture, the bolt pre-tightening force is adjusted and a pressure sensor is observed until the initial extrusion force borne by the battery cell 20 reaches 2000 N, and two electric connecting portions (a positive electrode terminal and a negative electrode terminal) of the battery cell 20 are connected to a charge-discharge device.
4) Place the battery cell 20 and the fixture in a constant-temperature environment of 25±2°C, and start the test after the battery cell 20 reaches temperature balance.
5) Perform the test steps with reference to the "standard cycle life" in Chapter 6.4 of GBT31484-2015 Cycle Life Requirements and Test Methods for Traction Battery 100 of Electric Vehicle, and change the test cycle stop condition into a condition of "stop test when a part provided with the first groove 222 in the first pressure relief component 22 is damaged".

Specifically, the test is carried out according to the following steps:
a) discharging at current of 1I₁(A) to reach 2.8 v;
b) standing for not less than 30 min;
c) charging according to a method in 6.1.1.3 of GBT31484-2015 Cycle Life Requirements and Test Methods for Traction Battery of Electric Vehicle;
d) standing for not less than 30 min;
e) discharging at current of 1I₁ (A) to reach 2.8 v; and
f) circulating according to b) to e), and stopping test until the part provided with the first groove 222 in the pressure relief component 22 is damaged.

That is, the area provided with the first groove 222 in the pressure relief component 22 of the battery cell 20 is continuously observed in the test process until the area is damaged and leaks liquid, and the cycle times are recorded as the cycle fatigue times of the battery cell 20. The more the cycle fatigue times of the battery cell 20 is, the smaller the probability of valve opening and liquid leakage caused by gas production of the battery cell 20 in the long-term use process is, and the longer the service life is.

A method for testing thermal runaway of the battery cell 20 includes:
1. selecting a heating plate according to the size of the battery cell 20, in which, the size of the heating plate is required to cover the large surface (coverage area: ≥60%) of the battery cell 20 as much as possible;
2. charging the battery cell 20 to 100% SOC before testing, and keeping the temperature of the battery cell 20 at 25±5°C; and
3. arranging a sensor:
   1) arranging temperature sensing lines: a layer of Teflon is adhered on the central areas of two large surfaces of the battery cell 20, the temperature sensing lines are arranged above the Teflon, and then a layer of Teflon is adhered;
   2) arranging voltage sampling lines: a layer of Teflon is attached on each of the positive electrode terminal, the negative electrode terminal and the shell 21 of the battery cell 20, the voltage sampling lines are arranged above the Teflon, and then a layer of Teflon is adhered;
   3) arranging an air pipe: the first wall portion 211 of the shell 21 of the battery cell 20 is drilled, in the length direction Y of the first wall portion, the drilling position is at the central position of the edge of the first groove 222 and the side surface of the shell 212 (the outer surface of the wall portion adjacent to the first wall portion 211 in the length direction Y of the first wall portion of the shell 212), the air pipe extends into the hole and the hole is sealed, and the air pipe is connected to an air pressure sensor;
   4) connecting the temperature sensing lines, the voltage sampling lines and the air pressure sensor to a data acquisition instrument to acquire and analyze data in real time, in which, the acquisition frequency of the data acquisition instrument is: ≤0.1S;
4. assembling the fixture, in which, the fixture completely covers the large surface (the outer surface perpendicular to the width direction Z of the first wall portion in the shell 212) of the battery cell 20, and the clamping force is 3000 N, and it is to be noted that: the arrangement sequence of the fixture, the heating plate and the battery cell is: fixture + heating plate + battery cell + fixture;
5. testing, in which, the data acquisition instrument is started to acquire temperature, voltage and air pressure data, and then the heating plate is started at the power of 500 W to heat the battery cell 20 until the thermal runaway of the battery cell occurs.
6. acquiring pressure holding duration of the battery cell 20, determining thermal runaway time and valve opening time according to the temperature, voltage and air pressure data acquired by the data acquisition instrument, and obtaining the pressure holding duration of the battery cell 20 according to pressure holding duration = valve opening time - thermal runaway time.

Thermal runaway determination standard: a) an object is triggered to perform voltage drop to exceed 25% of the initial voltage; b) the temperature of a detection point reaches the highest working temperature specified by a manufacturer; and c) the temperature rise rate of the detection point is dT/dt≥1°C/s, which lasts for more than 3 s. When a) and c) or b) and c) occur, thermal runaway is determined, and the thermal runaway time can be determined.

Determination of valve opening time: when the air pressure is reduced by more than 25%, valve opening can be determined (at least partially rupturing along the first weak portion 221), and the time that the air pressure starts to drop is the valve opening time. The valve opening time and the thermal runaway time can both be acquired from the data acquisition unit.

**Table 1:**

| | S₁ (mm²) | W (mm) | Test result 1 (Fatigue times) | Test result 2 (Gas holding duration/s) |
|---|---|---|---|---|
| Comparative Embodiment 1 | 0.002 | 150 | 872 | 1.3 |
| Comparative Embodiment 2 | 0.0026 | 130 | 914 | 1.6 |
| Embodiment 1 | 0.006 | 100 | 1037 | 2.1 |
| Embodiment 2 | 0.01 | 80 | 1132 | 2.2 |
| Embodiment 3 | 0.03 | 60 | 1569 | 2.5 |
| Embodiment 4 | 0.04 | 40 | 2113 | 2.8 |
| Embodiment 5 | 0.1 | 20 | 2484 | 3.1 |
| Embodiment 6 | 0.12 | 12 | 2527 | 3.3 |
| Embodiment 7 | 0.15 | 10 | 2555 | 3.9 |
| Comparative Embodiment 3 | 0.18 | 6 | 3142 | 5.3 |
| Comparative Embodiment 4 | 0.2 | 4 | 3273 | 5.4 |

As shown in Table 1, as W gradually decreases, the longer the gas holding duration of the battery cell 20 is, namely, as W gradually decreases, the poorer the timely pressure relief performance of the battery cell 20 is, and the higher the explosion risk of the battery cell 20 in thermal runaway is. As W gradually decreases, the fatigue times of the battery cell 20 gradually increase, namely, as W gradually decreases, the possibility of valve opening and liquid leakage due to fatigue of the battery cell 20 in the long-term use process gradually decreases.

As S₁ gradually increases, the shorter the gas holding duration of the battery cell 20 is, namely, as S₁ gradually increases, the poorer the timely pressure relief performance of the battery cell 20 is, and the higher the explosion risk of the battery cell 20 in thermal runaway is. As S₁ gradually increases, the fatigue times of the battery cell 20 gradually increase, namely, as S₁ gradually increases, the possibility of valve opening and liquid leakage caused by fatigue of the battery cell 20 in the long-term use process gradually decreases.

In Table 1, when W is 4 mm, and 6 mm, and S₁ is 0.2 mm², and 0.18 mm², the gas holding durations of the battery cell 20 are 5.4 s, and 5.3 s respectively, which are much greater than the gas holding duration under W of 10 mm, 12 mm, 20 mm, 40 mm, 60 mm, 80 mm, 100 mm, 130 mm and 150 mm and S₁ of 0.15 mm², 0.12 mm², 0.1 mm², 0.04 mm², 0.03 mm², 0.01 mm², 0.0026 mm², and 0.002 mm², that is, the gas holding duration of the battery cell in the Comparative Embodiment 3 and the Comparative Embodiment 4 are much greater than the gas holding duration of the battery cells 20 in the Embodiment 1 to the Embodiment 7, the Comparative Embodiment 1 and the Comparative Embodiment 2, so that when W≥10 mm, and S₁≤0.15mm², the possibility of timely pressure relief of the pressure relief component 22 of the battery cell 20 can be improved, and the risks of bursting, explosion, fire and the like of the shell 21 of the battery cell 20 caused by untimely pressure relief of the pressure relief component 22 are reduced.

When W is 150 mm, and 130 mm, and S₁ is 0.002 mm², and 0.0026 mm², the fatigue times of the battery cell 20 are 872, and 914 respectively, which are much smaller than the fatigue times of the battery cell 20 under W of 100 mm, 80 mm, 60 mm, 40 mm, 20 mm, 12mm, 10 mm, 6mm and 4mm and S₁ of 0.006 mm², 0.01 mm², 0.03 mm², 0.04 mm², 0.1 mm², 0.12 mm², 0.15 mm², 0.18 mm², and 0.2 mm², that is, the fatigue times of the battery cells 20 in the Comparative Embodiment 1 and the Comparative Embodiment 2 are much smaller than the fatigue times of the battery cells 20 in the Embodiment 1 to the Embodiment 7, the Comparative Embodiment and 3 and the Comparative Embodiment 4, so that when W≤100 mm, and S₁≥0.006 mm², the battery cell 20 has relatively long fatigue life, and the risk of liquid leakage caused by premature actuation or rupturing due to fatigue of the pressure relief component 22 in the corresponding area of the first groove 222 after long-term use of the battery cell 20 is reduced.

Therefore, 10 mm≤W≤100 mm, and 0.006mm²≤S₁≤0.15mm², the risks of bursting, explosion, fire and the like of the shell 21 of the battery cell 20 caused by untimely pressure relief of the pressure relief component 22 can be reduced, and the risk of liquid leakage caused by premature actuation or rupturing due to fatigue of the pressure relief component 22 in the corresponding position of the first groove 222 after long-term use of the battery cell 20 is reduced, thereby improving the use stability of the pressure relief component 22, prolonging the service life of the battery cell 20, and improving the operational reliability of the battery cell 20.

The size of the first wall portion 211 in the width direction is 10-100 mm, the size of the first wall portion 211 in the width direction is set to be greater than or equal to 10 mm so as to relieve the phenomenon that bursting pressure for the pressure relief component 22 to perform pressure relief on the battery cell 20 is excessively high due to excessively high pressure bearing capability of the first weak section 2211 of the first weak portion 221, and therefore, the risks of bursting, explosion, fire and the like of the shell 21 of the battery cell 20 caused by untimely pressure relief of the pressure relief component 22 can be further reduced, and then the operational reliability of the battery cell 20 can be further effectively improved. The size of the first wall portion 211 in the width direction is set to be smaller than or equal to 100 mm so as to reduce the deformation of the first weak section 2211 when an expansion force generated by expansion of the battery cell 20 in the use process acts on the pressure relief component 22, then the phenomenon that the structural strength is reduced due to excessively large deformation of the first weak portion 221 of the pressure relief component 22 can be further relieved, thereby further reducing the risk of liquid leakage caused by the phenomenon that the pressure relief component 22 is prematurely actuated or ruptures due to fatigue and the like on the first weak portion 221 after the battery cell 20 is used for a long time, further improving the use stability of the pressure relief component 22, and accordingly further prolonging the service life of the battery cell 20 and improving the operational reliability of the battery cell 20. The area of the cross section, perpendicular to the extension direction, of the first weak section 2211 is defined to be 0.006 mm² to 0.15 mm², the area of the cross section, perpendicular to the extension direction, of the first weak section 2211 is set to be greater than or equal to 0.006 mm² so as to reduce the deformation of the first weak section 2211 when the expansion force generated by expansion of the battery cell 20 in the use process acts on the pressure relief component 22, then the phenomenon that the structural strength of the first weak portion 221 of the pressure relief component 22 is reduced due to excessively large deformation can be relieved, thereby further reducing the risk of liquid leakage caused by the phenomenon that the pressure relief component is prematurely actuated or ruptures due to fatigue or the like on the first weak portion 221 after the battery cell 20 is used for a long time, further improving the use stability of the pressure relief component 22, and accordingly further prolonging the service life of the battery cell 20 and improving the operational reliability of the battery cell 20. The area of the cross section, perpendicular to the extension direction, of the first weak section 2211 is set to be smaller than or equal to 0.15 mm² so as to relieve the phenomenon that the bursting pressure for the pressure relief component 22 to perform pressure relief on the battery cell 20 is excessively high due to excessively high pressure bearing capacity of the first weak section 2211 of the first weak portion 221, and therefore, the risks of bursting, explosion, fire and the like of the shell of the battery cell 20 caused by untimely pressure relief of the pressure relief component 22 can be further reduced, and then the operational reliability of the battery cell 20 can be further effectively improved.

In some embodiments, 20 mm≤W≤80 mm, and 0.01mm²≤S₁≤0.1mm².

Exemplarily, W can be 20 mm, 25mm, 35mm, 45mm, 55mm, 65mm, 75mm, 80 mm, etc.

Exemplarily, S₁ can be 0.01 mm², 0.015 mm², 0.025 mm², 0.035 mm², 0.045 mm², 0.055 mm², 0.065 mm², 0.075 mm², 0.085 mm², 0.095 mm², 0.1 mm², etc.

With reference to Table 1, when W is 20 mm, 40 mm, 60 mm, 80 mm, and 100 mm relative to the W of 10 mm and 12mm, and S₁ is 0.1 mm², 0.04 mm², 0.03 mm², 0.01 mm², and 0.006 mm² relative to S₁ of 0.15 mm², and 0.12 mm², the gas holding duration of the battery cell 20 is longer, namely, the probability of explosion when the battery cell 20 is subjected to thermal runaway is higher, so that when W≥20 mm2 and S₁≤0.1mm2, the risk of explosion when the battery cell 20 is subjected to thermal runaway can be further reduced.

When W is 10 mm, 12mm, 20 mm, 40 mm, 60 mm and 80 mm relative to W of 100 mm, and S₁ is 0.15 mm2, 0.12 mm2, 0.1 mm2, 0.04 mm2, 0.03 mm2 and 0.01 mm2 relative to S₁ of 0.006 mm2, the fatigue times of the battery cell 20 is higher, namely, the risk of valve opening and liquid leakage in the long-term use process of the battery cell 20 is lower, so that when W≤80 mm2 and S₁≥0.01mm2, the risk of valve opening and liquid leakage in the long-term use process of the battery cell 20 can be further reduced.

Therefore, the size of the first wall portion 211 in the width direction is further defined to be 20-80 mm, the size of the first wall portion 211 in the width direction is set to be greater than or equal to 20 mm so as to further relieve the phenomenon that bursting pressure for the pressure relief component 22 to perform pressure relief on the battery cell 20 is excessively high due to excessively high pressure bearing capability of the first weak section 2211 of the first weak portion 221, and therefore, the risks of bursting, explosion, fire and the like of the shell 21 of the battery cell 20 caused by untimely pressure relief of the pressure relief component 22 can be further reduced, and then the operational reliability of the battery cell 20 can be further effectively improved. The size of the first wall portion 211 in the width direction is set to be smaller than or equal to 80 mm so as to reduce the deformation of the first weak section 2211 when the expansion force generated by expansion of the battery cell 20 in the use process acts on the pressure relief component 22, then the phenomenon that the structural strength is reduced due to excessively large deformation of the first weak portion 221 of the pressure relief component 22 can be further relieved, thereby further reducing the risk of liquid leakage caused by the phenomenon that the pressure relief component 22 is prematurely actuated or ruptures due to fatigue and the like on the first weak portion 221 after the battery cell 20 is used for a long time, further improving the use stability of the pressure relief component 22, and accordingly further prolonging the service life of the battery cell 20 and improving the operational reliability of the battery cell 20. The area of the cross section, perpendicular to the extension direction, of the first weak section 2211 is further defined to be 0.01-0.1 mm2, the area of the cross section, perpendicular to the extension direction, of the first weak section 2211 is set to be greater than or equal to 0.01 mm2 so as to further reduce the deformation of the first weak section 2211 when the expansion force generated by expansion of the battery cell 20 in the use process acts on the pressure relief component 22, then the phenomenon that the structural strength of the first weak portion 221 of the pressure relief component 22 is reduced due to excessively large deformation can be relieved, thereby further reducing the risk of liquid leakage caused by the phenomenon that the pressure relief component 22 is prematurely actuated or ruptures due to fatigue or the like on the first weak portion 221 after the battery cell 20 is used for a long time, further improving the use stability of the pressure relief component 22, and accordingly further prolonging the service life of the battery cell 20 and improving the operational reliability of the battery cell 20. The area of the cross section, perpendicular to the extension direction, of the first weak section 2211 is set to be smaller than or equal to 0.1 mm2 so as to relieve the phenomenon that the bursting pressure for the pressure relief component 22 to perform pressure relief on the battery cell 20 is excessively high due to excessively high pressure bearing capacity of the first weak section 2211 of the first weak portion 221, and therefore, the risks of bursting, explosion, fire and the like of the shell 21 of the battery cell 20 caused by untimely pressure relief of the pressure relief component 22 can be further reduced, and then the operational reliability of the battery cell 20 can be further effectively improved.

In some embodiments, the ratio of the area S₁ of the cross section, perpendicular to the extension direction, of the first weak section 2211 to the size W of the first wall portion 211 in the width direction is defined to be 0.00004-0.02, namely, 0.00004≤S₁/W≤0.02.

The ratio of the area S₁ of the cross section, perpendicular to the extension direction, of the first weak section 2211 to the size W of the first wall portion 211 in the width direction, namely, S₁/W can be 0.00004, 0.00005, 0.00006, 0.000089, 0.0001, 0.0002, 0.0003, 0.0004, 0.0005, 0.0006, 0.000125, 0.00029, 0.0005, 0.0007, 0.0008, 0.0009, 0.001, 0.002, 0.003, 0.004, 0.005, 0.006, 0.007, 0.008, 0.009, 0.01, 0.015, 0.02, etc.

Therefore, the ratio of the area of the cross section, perpendicular to the extension direction, of the first weak section 2211 of the first weak portion 221 to the size of the first wall portion 211 in the width direction is set to be 0.00004-0.02, and the ratio is set to be greater than or equal to 0.00004; when expansion force generated by expansion of the battery cell 20 in the use process acts on the pressure relief component 22, the concentration degree of stress on the first weak section 2211 of the first weak portion 221 can be reduced, and the pressure relief preset area P can absorb part of the expansion force, so that the phenomena of tensile deformation and the like of the first weak section 2211 of the first weak portion 221 of the pressure relief component 22 can be effectively relieved, the strain and strain amplitude of the first weak section 2211 of the first weak portion 221 of the pressure relief component 22 are reduced, that is, the deformation of the first weak section 2211 can be reduced, thereby relieving the phenomenon that the structural strength of the first weak portion 221 is reduced due to excessively high strain and strain amplitude, further reducing the risk of liquid leakage caused by that the pressure relief component 22 is prematurely actuated or ruptures due to fatigue at the first weak portion 221 after the battery cell 20 is used for a long time, improving the use stability of the pressure relief component 22, and accordingly prolonging the service life of the battery cell 20 and improving the operational reliability of the battery cell 20. The ratio is set to be smaller than or equal to 0.02 so as to relieve the phenomenon that the bursting pressure for the pressure relief component 22 to perform pressure relief on the battery cell 20 is excessively high due to excessively high pressure bearing capability of the first weak section 2211 of the first weak portion 221, and therefore, the risks of bursting, explosion, fire and the like of the shell 21 of the battery cell 20 caused by untimely pressure relief of the pressure relief component 22 can be further reduced, and then the operational reliability of the battery cell 20 can be further effectively improved.

In some embodiments, 0.00006≤S₁/W≤0.015.

Exemplarily, S₁/W can be 0.00006, 0.00015, 0.00025, 0.00035, 0.00045, 0.00055, 0.00065, 0.00075, 0.00085, 0.00095, 0.001, 0.0015, 0.0025, 0.0035, 0.0045, 0.005, 0.0065, 0.0075, 0.008, 0.0095, 0.015, etc.

The ratio of the area of the cross section, perpendicular to the extension direction, of the first weak section 2211 to the size of the first wall portion 211 in the width direction is set to be 0.00006-0.015, and the ratio of the area of the cross section, perpendicular to the extension direction, of the first weak section 2211 to the size of the first wall portion 211 in the width direction is greater than or equal to 0.00006, thus the deformation of the first weak section 2211 when the expansion force generated by expansion of the battery cell 20 in the use process acts on the pressure relief component 22 can be further reduced, then the phenomenon that the structural strength of the first weak portion 221 of the pressure relief component 22 is reduced due to excessively large deformation can be reduced, thereby further reducing the risk of liquid leakage caused by the phenomenon that the pressure relief component 22 is prematurely actuated or subjected to fatigue rupturing or the like at the first weak portion 221 after the battery cell 20 is used for a long time, further improving the use stability of the pressure relief component 22, and further prolonging the service life of the battery cell 20 and improving the operational reliability of the battery cell 20. The ratio of the area of the cross section, perpendicular to the extension direction, of the first weak section 2211 to the size of the first wall portion 211 in the width direction is smaller than or equal to 0.015, which further relieves the phenomenon that the bursting pressure for the pressure relief component 22 to perform pressure relief on the battery cell 20 is excessively high due to excessively high pressure bearing capability of the first weak section 2211 of the first weak portion 221, and therefore, the risks of bursting, explosion, fire and the like of the shell 21 of the battery cell 20 caused by untimely pressure relief of the pressure relief component 22 can be further reduced, and then the operational reliability of the battery cell 20 can be further effectively improved.

In some embodiments, the pressure relief component 22 is provided with the first groove 222, the first groove 222 includes at least one groove section, the pressure relief component 22 forms at least one first weak section 2211 at the area provided with the groove section, the width of the bottom surface of the groove section is A and its unit is mm, the thickness of the first weak section 2211 is H and its unit is mm, and A and H meet: S₁=A×H; 0.1mm≤A≤0.3mm, 0.06mm≤H≤0.5mm.

The width A of the groove bottom surface of the groove section can be the size of the groove bottom surface of the groove section in the width direction. The thickness of the first weak section 2211 is the size of the first weak section 2211 in the in the thickness direction X of the first wall portion.

Round corners or chamfers for transition are formed at corners of the groove bottom surface and the groove side surface of the groove section; when measuring the width A of the groove bottom surface of the groove section, it is needed to remove the size of the round corners and the chambers, that is, the area of the cross section of the first weak section 2211 is calculated by multiplying the width of the groove bottom surface of the groove section and the thickness of the first weak section 2211 that is correspondingly formed at the groove section, and the measurement for the width of the groove bottom surface of the groove section and the thickness of the first weak section 2211 that is correspondingly formed at the groove section is to be performed in other areas except the round corners or the chamfers between the groove side surface and the groove bottom surface.

If the two ends of the groove section in the extension direction have the round corners or chamfers, the area of the cross section of the first weak section 2211 is calculated by multiplying the width of the groove bottom surface of the groove section and the thickness of the first weak section 2211 that is correspondingly formed at the groove section, and the measurement for the width of the groove bottom surface of the groove section and the thickness of the first weak section 2211 that is correspondingly formed at the groove section is to be performed in other areas except the round corners or chamfer at the two ends of the groove section in the extension direction.

Exemplarily, the width A of the groove bottom surface of the groove section can be 0.1 mm, 0.13 mm, 0.15 mm, 0.17 mm, 0.19 mm, 0.2 mm, 0.23 mm, 0.25 mm, 0.27 mm, 0.29 mm, 0.3 mm, etc.

Exemplarily, the thickness H of the first weak section 2211 can be 0.06 mm, 0.08 mm, 0.1 mm, 0.15 mm, 0.2 mm, 0.25 mm, 0.3 mm, 0.35 mm, 0.4 mm, 0.45 mm, 0.5 mm, etc.

In order to make the technical problems, technical solutions and beneficial effects solved by the embodiment of the present application clearer, the following shows further detailed description in combination with Embodiments 8-12. Obviously, the described examples are only some examples of the present application, not all examples. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

The preparation method for the battery cell 20 in the Embodiments 8 to 12 is the same as that in the Embodiment 1, the difference of the battery cells 20 in the Embodiment 8 to 12 is that the width A of the groove bottom surface of the groove section and the thickness H of the first weak section 2211 are different, as shown in Table 2.

**Table 2:**

| | A(mm) | H(mm) | S₁(mm²) | Test result 1 (Fatigue times) | Test result 2 (Gas holding duration/s) |
|---|---|---|---|---|---|
| Embodiment 8 | 0.1 | 0.06 | 0.006 | 1253 | 2.1 |
| Embodiment 9 | 0.15 | 0.1 | 0.015 | 1875 | 2.3 |
| Embodiment 10 | 0.2 | 0.2 | 0.04 | 2252 | 2.5 |
| Embodiment 11 | 0.25 | 0.3 | 0.075 | 2807 | 3.1 |
| Embodiment 12 | 0.3 | 0.5 | 0.15 | 3125 | 3.2 |

As shown in Table 2, as A gradually increases, the fatigue times of the battery cell 20 gradually increase, and the possibility of valve opening and liquid leakage in the long-term use process of the battery cell 20 gradually decreases. As A gradually increases, the gas holding duration of the battery cell 20 gradually increases, the possibility of timely pressure relief of the pressure relief component 22 of the battery cell 20 gradually decreases, and the risk of explosion of the battery cell 20 in thermal runaway gradually increases.

As H gradually increases, the fatigue times of the battery cell 20 gradually increase, and the possibility of valve opening and liquid leakage in the long-term use process of the battery cell 20 gradually decreases. As H gradually increases, the gas holding duration of the battery cell 20 gradually increases, the possibility of timely pressure relief of the pressure relief component 22 of the battery cell 20 gradually decreases, and the risk of explosion of the battery cell 20 in thermal runaway gradually increases.

As shown in Table 1 and Table 2, when the width A of the bottom surface of the groove section is greater than or equal to 0.1 mm, and the thickness H of the first weak portion 221 is greater than or equal to 0.06 mm, the fatigue times of the battery cell 20 are greater than or equal to 1253, so that the battery cell 20 has a long fatigue life, the possibility of premature actuation or fatigue rupturing and the like of the pressure relief component 22 in the use process is low, the possibility of valve opening and liquid leakage of the pressure relief component 22 in the long-term use process of the battery cell 20 is reduced, thereby prolonging the service life of the battery cell 20.

When the width A of the bottom surface of the groove section is less than or equal to 0.3 mm, and the thickness H of the first weak portion 221 is less than or equal to 0.5 mm, the gas holding duration of the battery cell 20 is less than or equal to 3.2 s, the possibility of explosion, bursting, fire and the like of the battery cell 20 in thermal runaway is low, therefore, the risks of bursting, explosion, fire and the like of the battery cell 20 caused by untimely pressure relief of the pressure relief component 22 can be further reduced, and then the operational reliability of the battery cell 20 can be further effectively improved.

Therefore, the area S1 of the cross section, perpendicular to the extension direction, of the first weak section 2211 of the first weak portion 221 is the product of the width A of the groove bottom surface of the groove section and the thickness H of the first weak section 221, the width A of the groove bottom surface of the groove section is set to be 0.1 mm to 0.3 mm, and the thickness H of the first weak portion 221 is set to be 0.06 mm to 0.5 mm; the width A of the groove bottom surface of the groove section is set to be greater than or equal to 0.1 mm, and the thickness H of the first weak portion 221 is set to be greater than or equal to 0.06 mm, so that the concentration degree of stress generated by expansion of the battery cell 20 on the first weak section 2211 of the first weak portion 221 can be reduced, the absorption effect of the predetermined pressure relief region P on the stress can be improved, thereby further reducing the strain and strain amplitude of the first weak portion 221 of the pressure relief component 22, and further reducing the risk of premature actuation or fatigue rupturing of the pressure relief component 22 in the use process of the battery cell 20. The width A of the groove bottom surface of the groove section is set to be less than or equal to 0.3 mm, and the thickness H of the first weak portion 221 is set to be less than or equal to 0.5 mm, so that the bursting pressure for the pressure relief component 22 to perform pressure relief can be reduced, and furthermore, risks of bursting, explosion, fire and the like of the shell 21 of the battery cell 20 caused by untimely pressure relief of the pressure relief component 22 can be reduced.

In some embodiments, 0.15mm≤A≤0.25mm; and 0.1mm≤H≤0.3mm.

With reference to Table 2, when the width A of the groove bottom surface of the groove section is greater than or equal to 0.15 mm, and the thickness H of the first weak portion 221 is greater than or equal to 0.1mm, the fatigue times of the battery cell 20 are greater, the fatigue life of the battery cell 20 is longer, and thus the risk of valve opening and liquid leakage in the long-term use process of the battery cell 20 can be further reduced.

When the width A of the groove bottom surface of the groove section is smaller than or equal to 0.25 mm, and the thickness H of the first weak portion 221 is smaller than or equal to 0.3 mm, the gas holding time of the battery cell 20 is shorter, so that when A≤0.25mm and H≤0.3mm, the gas holding time of the battery cell 20 is shorter, and the risk of explosion of the battery cell 20 in thermal runaway is lower.

Therefore, the width A of the groove bottom surface of the groove section is set to be greater than or equal to 0.15 mm, and the thickness H of the first weak portion 221 is set to be greater than or equal to 0.1 mm, so that the concentration degree of stress generated by expansion of the battery cell 20 at the first weak section 2211 of the first weak portion 221 can be reduced, furthermore, the absorption effect of the predetermined pressure relief region P on the stress can be improved, thereby further reducing the strain and strain amplitude of the first weak portion 221 of the pressure relief component 22, and further reducing the risk of premature actuation or fatigue rupturing of the pressure relief component 22 in the use process of the battery cell 20. The width A of the groove bottom surface of the groove section is set to be less than or equal to 0.25 mm, and the thickness H of the first weak portion 221 is set to be less than or equal to 0.3 mm, so that the bursting pressure for the pressure relief component 22 to perform pressure relief can be reduced, and the risks of bursting, explosion, fire and the like of the shell 21 of the battery cell 20 caused by untimely pressure relief of the pressure relief component 22 can be further reduced.

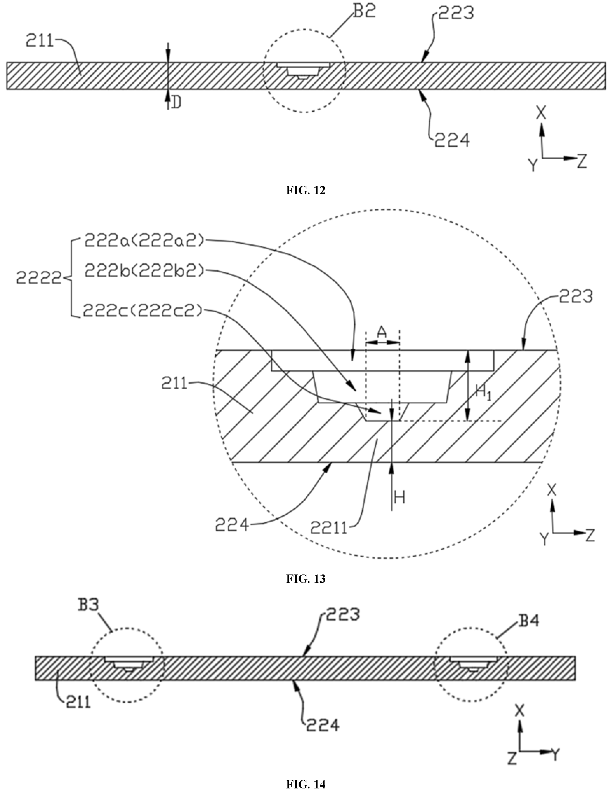

As shown in FIG. 12 and FIG. 13, in the thickness direction X of the first wall portion, the maximum groove depth of the first groove 222 is H1, the thickness of the pressure relief component 22 is D, 0.16≤H₁/D<1.

H₁/D can be any point value of 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99 and the like or a range value between any two of the previous values.

It is to be understood that if the pressure relief component 22 and the first wall portion 211 are integrally formed, the first wall portion 211 can be used as the pressure relief component 22, and the thickness of the pressure relief component 22 is the thickness of the first wall portion 211.

In this embodiment, 0.16≤H₁/D<1, so that the maximum depth of the first groove 222 does not account for too small proportion in the thickness of the pressure relief component 22, and the bursting pressure of the battery cell 20 is not too high, which is conducive to improving the pressure relief timeliness of the battery cell 20.

In some embodiments, 0.4mm≤H₁≤2mm, and 0.8mm≤D≤2.5mm.

H₁ can be any point value of 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm and the like or a range value between any two of the previous values.

D can be any point value of 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm and the like or a range value between any two of the previous values.

In this embodiment, 0.4mm≤H₁≤2mm, and 0.8mm≤D≤2.5mm, so that the maximum depth of the first groove 222 and the thickness of the pressure relief component 22 are in a reasonable range, and better economic efficiency is achieved. In an embodiment where the first wall portion 211 serves as the pressure relief component 22, the thickness of the first wall portion 211 is 0.8-2.5 mm, and the thickness of the first wall portion 211 is greater than or equal to 0.8 mm, so that the first wall portion 211 has enough strength; the thickness of the first wall portion 211 is less than or equal to 2 mm, so that the thickness of the first wall portion 211 is not too high; and in a case that the size of the shell 21 is certain, the internal space of the shell 21 can be expanded, and therefore, more space is provided for the electrode assembly 23. Under the condition that the thickness of the first wall portion 211 is controlled to be in a range of 0.8-2.5 mm, the maximum groove depth of the first groove 222 is controlled to be in a range of 0.4-2 mm, thus the maximum groove depth of the first groove 222 is more matched with the thickness of the pressure relief component 22, and the pressure relief component 22 has good pressure relief capability.

In some embodiments, the pressure relief component 22 is provided with a first surface 223 and a second surface 224 which are oppositely arranged in the thickness direction X of the first wall portion, the first groove 222 is in a form of multi-stage score grooves, the multi-stage score grooves are sequentially arranged in the direction from the first surface 223 to the second surface 224, and in two adjacent stages of score grooves, one stage of score groove far away from the first surface 223 is arranged on the groove bottom surface of one stage of score groove close to the first surface 223.

That is, multi-stage stepped groove structures which are sequentially arranged from the first surface 223 to the second surface 224 are formed on the pressure relief component 22, and the stepped groove structures can be formed by one-time or multiple-time stamping. The stepped groove structures can also be formed by multiple etching.

In an embodiment where the first groove 222 includes a plurality of groove sections, each groove section can also be of a multi-stage score groove structure.

The first groove 222 is arranged to be the stepped groove structure arranged in the thickness direction X of the first wall portion, so the first groove 222 is a groove formed by multiple processing; with such structure, under the condition of forming the first weak portion 221 with the same thickness, on one hand, the depth in single processing of the score groove can be reduced, the manufacturing difficulty of forming the first weak portion 221 with the same thickness and the requirement on manufacturing devices are reduced, thus the manufacturing cost is reduced, moreover, the forming force borne by the pressure relief component 22 during single processing in the forming process of the first weak portion 221 can be reduced, the risk that the pressure relief component 22 ruptures is reduced, and the production quality of the battery cell 20 is improved; and on the other hand, the flowing material form of the first weak portion 221 in the forming process can be improved, thus the resulted flowing of the materials in the forming of the first weak portion 221 is facilitated, and the structure consistency of the multi-stage score groove is improved.

In an embodiment where the first groove 222 includes a plurality of groove sections, each groove section can also be of a three-stage score groove structure.

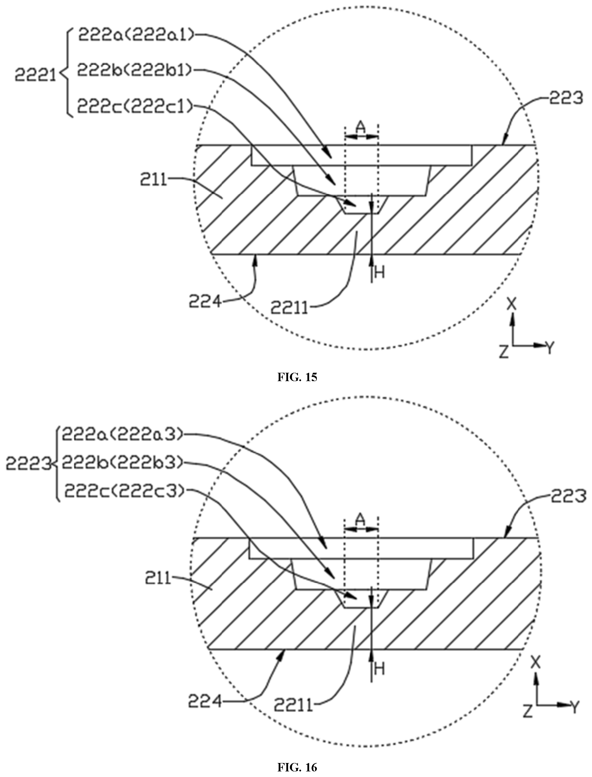

Exemplarily, as shown in FIG. 11 to FIG. 16, the first groove 222 includes three stages of score grooves which are sequentially arranged in the direction from the first surface 223 to the second surface 224. The three stages of score grooves can be defined as a first sub-groove 222a, a second sub-groove 222b and a third sub-groove 222c; and the first sub-groove 222a, the second sub-groove 222b and the third sub-groove 222c are sequentially arranged in the direction from the first surface 223 to the second surface 224, the second sub-groove 222b is arranged on the groove bottom surface of the first sub-groove 222a, and the third sub-groove 222c is arranged on the groove bottom surface of the second sub-groove 222b.

Exemplarily, as shown in FIG. 11 to FIG. 16, in an embodiment where the first groove 222 includes the first groove section 2221, the second groove section 2222 and the third groove section 2223, the first sub-groove 222a includes a first section 222a1, a second section 222a2 and a third section 222a3; the second sub-groove 222b includes a fourth section 222b1, a fifth section 222b2 and a sixth section 222b3; and the third sub-groove 222c includes a seventh section 222c1, an eighth section 222c2 and a ninth section 222c3. The fourth section 222b1 is arranged on the groove bottom surface of the first section 222a1, the seventh section 222c1 is arranged on the groove bottom surface of the fourth section 222b1, and the first section 222a1, the fourth section 222b1 and the seventh section 222c1 jointly form the first groove section 2221; the fifth section 222b2 is arranged on the groove bottom surface of the second section 222a2, and the eighth section 222c2 is arranged on the groove bottom surface of the fifth section 222b2; and the second section 222a2, the fifth section 222b2 and the eighth section 222c2 jointly form the second groove section 2222; the sixth section 222b3 is arranged on the groove bottom surface of the third section 222a3, and the ninth section 222c3 is arranged on the groove bottom surface of the sixth section 222b3; and the third section 222a3, the sixth section 222b3 and the ninth section 222c3 jointly form the third groove section 2223.

The first groove 222 includes the three stages of score grooves, and under the condition of forming first weak portion 221 with the same thickness, the depth in single processing of the score grooves can be reduced, the manufacturing difficulty of forming the first weak portion 221 with the same thickness and the requirement for manufacturing devices can be reduced, thus the manufacturing cost can be reduced, the forming force borne by the pressure relief component 22 during single processing in the forming process of the first weak portion 221 can be reduced, the risk that the pressure relief component 22 ruptures can be reduced, and the production quality of the battery cell 20 can be improved; and on the other hand, the flowing material form of the first weak portion 221 in the forming process can be improved, thus the resulted flowing of the materials in the forming process of the first weak portion 221 is facilitated, and the structure consistency of the score grooves is improved; and moreover, the problem that the processing duration is increased due to multiple processing for the first weak portion 221 is solved.

Definitely, in some other embodiments, the pressure relief components 22 can also be provided with two stages of score grooves, fourth stages of score grooves, five stages of score grooves or sixth stages of score grooves or the like.

As shown in FIG. 17 to FIG. 20, in some embodiments, the pressure relief component 22 further includes a second weak portion 228 which is configured to guide the predetermined pressure relief region P to be opened.

Specifically, in the thickness direction X of the first wall portion, the thickness of the second weak portion 228 can be greater than that of the first weak portion 221, and specifically, the thickness of the second weak portion 228 is greater than that of the first weak section 2211 of the first weak portion 221. The second weak portion 228 is configured to guide the predetermined pressure relief region P to be overturned when the first weak portion 221 ruptures so as to relieve the pressure inside the battery cell 20. As shown in FIG. 18 to FIG. 20, the thickness of the second weak portion 228 is M, and M>H.

The thickness of the second weak portion 228 is greater than that of the first weak portion 221, so that the pressure relief component 22 can preferentially rupture along the first weak portion 221 and open the predetermined pressure relief region P. The second weak portion 228 is configured to guide the predetermined pressure relief region P to be overturned when the first weak portion 221 ruptures, that is, the predetermined pressure relief region P can be overturned by taking the second weak portion 228 as an overturning shaft after the first weak portion 221 ruptures, so that the interior and the exterior of the shell 21 are in communication with each other to relieve pressure after the predetermined pressure relief region P is overturned.

The second weak portion 228 can guide the predetermined pressure relief region P to be opened, so that the opening effect of the predetermined pressure relief region P of the pressure relief component 22 can be improved, which is conducive to increasing the pressure relief area of the battery cell 20 after the predetermined pressure relief region P is opened, furthermore, the pressure relief rate of the battery cell 20 in thermal runaway can be increased, thereby reducing the risks of fire explosion, connection failure and the like caused by untimely pressure relief of the battery cell 20 can be reduced, and the operational reliability of the battery cell 20 can be improved.

The second weak portion 228 can be formed in various ways, for example, in some embodiments, the pressure relief component 22 is provided with the second groove 225, and the pressure relief component 22 forms the second weak portion 228 at the area provided with the second groove 225.

It is to be understood that the second weak portion 228 is formed on the groove bottom wall of the second groove 225, that is, the pressure relief component 22 is provided with the position of the second groove 225 and the corresponding part of the groove bottom surface of the second groove 225 is the second weak portion 228. Definitely, in some other embodiments, the second weak portion 228 can also be of other structures, for example, heat treatment is performed on part of the pressure relief component 22 to weaken the strength of the area, thereby forming the second weak portion 228.

The pressure relief component 22 is provided with the second groove 225, so that the pressure relief component 22 forms the second weak portion 228 at the corresponding area of the second groove 225; and for the battery cell 20 with such structure, the second weak portion 228 is conveniently formed on the pressure relief component 22, which is beneficial to reducing the difficulty of forming the second weak portion 228 on the pressure relief component 22, thereby improving the production efficiency of the battery cell 20.

In some embodiments, the second groove 225 is arranged in the surface, facing the interior of the shell 21, of the pressure relief component 22.

The surface, facing the interior of the shell 21, of the pressure relief component 22 is the surface, facing the electrode assembly 23, of the pressure relief component 22. The second groove 225 is arranged in the surface, facing the interior of the shell 21, of the pressure relief component 22, that is, the second groove 225 is arranged in the surface, facing the electrode assembly 23, of the pressure relief component 22, and the second groove 225 is sunken from the surface, facing the electrode assembly 23, of the pressure relief component 22 in a direction deviating from the electrode assembly 23.

Exemplarily, in FIG. 17, the second groove 225 is of a strip-shaped structure and is parallel to the second groove section 2222, so that the second weak portion 228 is of a strip-shaped structure, thereby facilitating the predetermined pressure relief region P to be turned around the second weak portion 228 after being opened.

By arranging the second groove 225 in the surface, facing the interior of the shell 21, of the pressure relief component 22, the predetermined pressure relief region P can be conveniently overturned towards the outer side of the shell 21 around the groove bottom wall of the second groove 225 when being opened, thereby reducing the interference influence of the groove side surface of the second groove 225 on the predetermined pressure relief region P in the overturning process, and facilitating the improvement of the overturning effect of the predetermined pressure relief region P.

Definitely, in some other embodiments, the second groove 225 can also be formed in the side, deviating from the electrode assembly 23, of the pressure relief component 22.

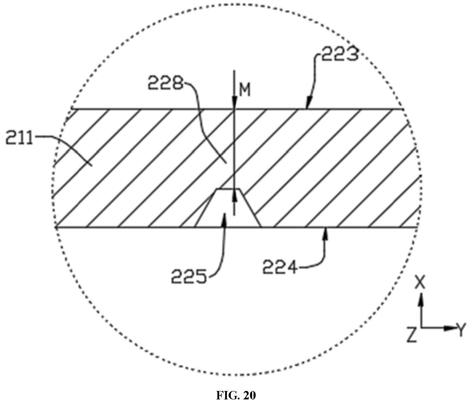

As shown in FIG. 19 and FIG. 20, in some embodiments, the pressure relief component 22 is provided with the first surface 223 and the second surface 224 which are oppositely arranged in the thickness direction X of the first wall portion, the first surface 223 is provided with the first groove 222, the pressure relief component 22 forms the first weak portion 221 in the area provided with the first groove 222, the second surface 224 is provided with the second groove 225, and the pressure relief component 22 forms the second weak portion 228 in the area provided with the second groove 225.

The first surface 223 and the second surface 224 are the surfaces of two opposite sides, in the thickness direction X of the first wall portion, of the pressure relief component 22 respectively. In the thickness direction of the first wall, the first groove 222 and the second groove 225 are formed in two sides of the pressure relief component 22 respectively.

Exemplarily, the first groove 222 is formed in the surface, deviating from the interior of the shell 21, of the pressure relief component 22, and the second groove 225 is formed in the surface, facing the interior of the shell 21, of the pressure relief component 22, so that the first groove 222 and the second groove 225 are formed in the two sides of the pressure relief component 22 respectively.

By arranging the first groove 222 and the second groove 225 in the first surface 223 and the second surface 224, opposite in the thickness direction X of the first wall portion, of the pressure relief component 22 respectively, the first groove 222 and the second groove 225 can be conveniently processed in two sides, in the thickness direction X of the first wall portion, of the pressure relief component 22 respectively, so that the mutual influence of the first groove 222 and the second groove 225 in the processing process can be reduced.

In some embodiments, the first surface 223 is the surface, deviating from the interior of the shell 21, of the pressure relief component 22, and the second surface 224 is the surface, facing the interior of the shell 21, of the pressure relief component 22.

That is, the first groove 222 is formed in the surface, deviating from the interior of the shell 21, of the pressure relief component 22, and the first groove 222 is sunken from the first surface 223 to the direction close to the second surface 224. The second groove 225 is arranged in the surface, facing the interior of the shell 21, of the pressure relief component 22, and the second groove 225 is sunken from the second surface 224 to the direction close to the first surface 223.

By arranging the first groove 222 and the second groove 225 in the first surface 223 and the second surface 224, opposite in the thickness direction X of the first wall portion, of the pressure relief component 22 respectively, the first groove 222 and the second groove 225 can be conveniently processed in two sides, in the thickness direction X of the first wall portion, of the pressure relief component 22 respectively, so that the mutual influence of the first groove 222 and the second groove 225 in the processing process can be reduced. Moreover, the second groove 225 is arranged in the second surface 224, facing the interior of the shell 21, of the pressure relief component 22, so that the predetermined pressure relief region P can be conveniently overturned towards the outer side of the shell 21 around the groove bottom wall of the second groove 225 when being opened, the interference influence of the groove side surface of the second groove 225 on the predetermined pressure relief region P in the overturning process can be reduced, and the overturning effect of the predetermined pressure relief region P is improved.

In some embodiments, the projection of the first groove 222 is not in contact with the projection of the second groove 225 in the thickness direction X of the first wall portion.

It is to be understood that the first groove 222 and the second groove 225 do not intersect with each other. The pressure relief component 22 is provided with multi-stage score grooves, and in an embodiment where the stage of score groove, farthest away from the first surface 223, in the multi-stage score grooves is the first groove 222, the second groove 225 can also not intersect with the stage of score groove, closest to the first surface 223, in the multi-stage score grooves.

By setting the projection of the first groove 222 in the thickness direction X of the first wall portion and the projection of the second groove 225 in the thickness direction X of the first wall portion into non-contact structures, on one hand, the mutual influence of the first groove 222 and the second groove 225 in the processing process can be reduced, on the other hand, the phenomenon that the second weak portion 228 ruptures when the first weak portion 221 ruptures for pressure relief can be reduced, and therefore, the stress influence between the first weak portion 221 and the second weak portion 228 can be reduced.

In an embodiment where the first groove 222 includes a plurality of groove sections, one first weak section 2211 is formed in the corresponding area of each groove section. Exemplarily, the pressure relief component 22 is provided with the first groove 222, and the pressure relief component 22 forms the first weak portion 221 at the area provided with the first groove 222; and the first groove 222 includes the first groove section 2221 and the second groove section 2222 which are interconnected, the pressure relief component 22 forms the first weak section 2211 at the area of the first groove section 2221, and the pressure relief component 22 forms the first weak section 2211 at the corresponding area of the second groove section 2222.

The first groove section 2221 can extend along a straight line. The second groove section 2222 can extend in a straight line. The first groove section 2221 and the second groove section 2222 jointly define at least one predetermined pressure relief region P, and the predetermined pressure relief region P is configured to be opened when the pressure relief component 22 ruptures along at least part of the first weak portion 221 so as to relieve the pressure inside the battery cell 20.

The first groove section 2221 can also extend along a curve, for example, the first groove section 2221 is an arc-shaped section. The second groove section 2222 can also extend along a curve, for example, the second groove section 2222 is an arc-shaped section.

Each of the first groove section 2221 and the second groove section 2222 forms one first weak section 2211, and the first weak portion 221 can include two first weak sections 2211. Because the first groove section 2221 and the second groove section 2222 are interconnected, the first weak section 2211 formed at the area of the first groove section 2221 and the first weak section 2211 formed at the area of the second groove section 2222 are interconnected to form the first weak portion 221 including the two interconnected first weak sections 2211. When one of the first weak sections 2211 starts to rupture, the other first weak section 2211 will be driven to rupture, so that the first weak portion 221 can quickly rupture to open the predetermined pressure relief region P to realize quick pressure relief.

The first groove section 2221 and the second groove section 2222 jointly define the predetermined pressure relief region P, namely the first groove section 2221 and the second groove section 2222 are of structures arranged along the edge of the predetermined pressure relief region P, so that the arrangement track of the first groove 222 is arranged along the edge of the predetermined pressure relief region P.

The predetermined pressure relief region P is configured to be opened when the pressure relief component 22 ruptures along at least part of the first weak portion 221, that is, when the battery cell 20 is subjected to thermal runaway and internal pressure is relieved, the areas provided with the first groove section 2221 and the second groove section 2222 of the pressure relief component 22 can rupture, and thus the predetermined pressure relief region P can be opened and the pressure inside the battery cell 20 can be relieved.

The first groove section 2221 and the second groove section 2222 can be interconnected by various modes, for example, the first groove section 2221 and the second groove section 2222 are connected to form a "T" shape, the first groove section 2221 and the second groove section 2222 are connected to form a "V" shape, the first groove section 2221 and the second groove section 2222 are connected to form an "L" shape, the first groove section 2221 and the second groove section 2222 are connected to form an "X" shape, and the like.

The first groove 222 includes the first groove section 2221 and the second groove section 2222 which are of interconnected structures, therefore, on one hand, the pressure relief area of the battery cell 20 can be increased, thus the pressure relief rate of the battery cell 20 is improved; and on the other hand, the position in which the first groove section 2221 and the second groove section 2222 are interconnected are weaker, so the predetermined pressure relief region P is easier to be opened to relieve pressure inside the battery cell 20.

As shown in FIG. 17, in some embodiments, the first groove 222 includes a third groove section 2223; the first groove section 2221 and the third groove section 2223 are oppositely arranged, and the second groove section 2222 is connected to the first groove section 2221 and the third groove section 2223; and the pressure relief component 22 forms the first weak section 2211 at the corresponding area of the third groove section 2223.

The third groove section 2223 can extend in a straight line. The first groove section 2221, the second groove section 2222 and the third groove section 2223 jointly define the predetermined pressure relief region P, and the predetermined pressure relief region P is configured to be opened when the pressure relief component 22 ruptures along at least part of the first weak portion 221 so as to relieve the pressure inside the battery cell 20.

The extension direction of the first groove section 2221 is parallel to the extension direction of the third groove section 2223, the extension direction of the first groove section 2221 is perpendicular to the extension direction of the second groove section 2222, and the extension direction of the third groove section 2223 is perpendicular to the extension direction of the second groove section 2222. That is, the first groove section 2221 and the third groove section 2223 are respectively perpendicular to the second groove section 2222.

The first groove section 2221, the second groove section 2222 and the third groove section 2223 can be connected by various modes, for example, the first groove section 2221, the second groove section 2222 and the third groove section 2223 are connected to form an "H" shape, and the first groove section 2221, the second groove section 2222 and the third groove section 2223 are connected to form a "U" shape.

In some other embodiments, the third groove section 2223 can also extend along a curve, for example, the third groove section 2223 is an arc-shaped section.

The groove bottom wall of the first groove section 2221, the groove bottom wall of the second groove section 2222 and the groove bottom wall of the third groove section 2223 form the first weak sections 2211, that is, the first weak portion 221 includes three first weak sections 2211 which are respectively the groove bottom wall of the first groove section 2221, the groove bottom wall of the second groove section 2222 and the groove bottom wall of the third groove section 2223; and the three first weak sections 2211 form the first weak portion 221.

If one first weak section 2211 is formed at the corresponding area of the third groove section 2223, the first weak portion 221 includes three first weak sections 2211. If the second groove section 2222 is connected to the first groove section 2221 and the third groove section 2223, the first weak section 2211 formed at the corresponding area of the second groove section 2222 is connected to the first weak section 2211 formed at the corresponding area of the first groove section 2221 and the first weak section 2211 formed at the corresponding area of the third groove section 2223; and when one of the first weak sections 2211 starts to rupture, the other first weak section 2211 will be driven to rupture, thus the first weak portion 221 can quickly rupture to open the predetermined pressure relief region P for quick pressure relief.

The first groove section 2221 and the third groove section 2223 are oppositely arranged, that is, the first groove section 2221 and the third groove section 2223 are arranged at an interval. Exemplarily, in FIG. 17, the first groove section 2221 and the third groove section 2223 are arranged at an interval in the length direction Y of the first wall portion and both extend in the width direction Z of the first wall portion.

The second groove section 2222 is connected to the first groove section 2221 and the third groove section 2223, that is, the second groove section 2222 is located between the first groove section 2221 and the third groove section 2223, and two ends of the second groove section 2222 are respectively connected to the first groove section 2221 and the third groove section 2223, exemplarily, in FIG. 17, the second groove section 2222 extends in the length direction Y of the wall portion. Definitely, in some other embodiments, the second groove section 2222 also can extend out of the first groove section 2221 and the third groove section 2223 at two ends in the length direction Y of the wall portion.

The first groove 222 is provided with the first groove section 2221 and the third groove section 2223 which are oppositely arranged, and the second groove section 2222 which is connected to the first groove section 2221 and the third groove section 2223, so that the pressure relief component 22 can rupture along the first groove section 2221, the second groove section 2222 and the third groove section 2223 when the battery cell 20 is subjected to pressure relief, and the predetermined pressure relief region P is opened to relieve the pressure inside the battery cell 20; by adopting the first groove 222 with such structure, the position in which the first groove section 2221 and the second groove section 2222 intersect with each other and the position in which the second groove section 2222 and the third groove section 2223 intersect with each other are weaker, so they are easier to rupture and the predetermined pressure relief region P is opened to relieve the pressure, and the pressure relief area and the pressure relief rate of the battery cell 20 can be further improved.

As shown in FIG. 17, in some embodiments, the position in which the second groove section 2222 is connected to the first groove section 2221 deviates from the two ends of the first groove section 2221, and the position in which the second groove section 2222 is connected to the third groove section 2223 deviates from the two ends of the third groove section 2223.

The position in which the second groove section 2222 is connected to the first groove section 2221 deviates from the two ends of the first groove section 2221 in the extension direction. The position in which the second groove section 2222 is connected to the third groove section 2223 deviates from the two ends of the third groove section 2223 in the extension direction.

The position in which the first groove section 2221 is connected to the second groove section 2222 deviates from the two ends of the first groove section 2221, namely, the second groove section 2222 is connected between the two ends of the first groove section 2221, similarly, the position in which the third groove section 2223 is connected to the second groove section 2222 deviates from the two ends of the third groove section 2223, that is, the second groove section 2222 is connected between the two ends of the third groove section 2223, therefore, the first groove 222 formed by the first groove section 2221, the second groove section 2222 and the third groove section 2223 jointly has the shape similar to "H", and the predetermined pressure relief regions P are formed on the two sides of the second groove section 2222; and definitely, the two predetermined pressure relief regions P have the same or different area.

Exemplarily, the second groove section 2222 is of a linear structure extending in the Y length direction of the first wall portion, the first groove section 2221 and the third groove section 2223 are both of linear structures extending in the width direction Z of the first wall portion, and the second groove section 2222 is positioned between the first groove section 2221 and the third groove section 2223 in the length direction Y of the first wall portion.

The first groove section 2221, the second groove section 2222 and the third groove section 2223 are arranged to extend along a linear track, and the first groove section 2221 and the third groove section 2223 are both arranged perpendicular to the second groove section 2222, so that the extension direction of the second groove section 2222 is the arrangement direction of the first groove section 2221 and the third groove section 2223; on one hand, the regularity of the shape of the first groove 222 can be improved, and the processing difficulty of the first groove 222 can be reduced, thereby reducing the manufacturing cost of the battery cell 20; and on the other hand, two predetermined pressure relief regions P positioned on the two sides of the second groove section 2222 are can be oppositely opened for pressure relief when the battery cell 20 is subjected to pressure relief.

If the position in which the second groove section 2222 is connected to the first groove section 2221 deviates from the two ends of the first groove section 2221, the position in which the first groove section 2221 is connected to the second groove section 2222 is between the two ends of the first groove section 2221; and if the position in which the second groove section 2222 is connected to the third groove section 2223 deviates from the two ends of the third groove section 2223, the position in which the third groove section 2223 is connected to the second groove section 2222 is between the two ends of the third groove section 2223; the first groove section 2221, the second groove section 2222 and the third groove section 2223 form a structure similar to an "H" shape, so that the predetermined pressure relief regions P can be formed on the two sides of the second groove section 2222 of the first groove 222, and the two predetermined pressure relief regions P can be oppositely opened for pressure relief when the battery cell 20 is subjected to pressure relief, which is conducive to further improving the pressure relief effect of the battery cell 20, thereby effectively improving the pressure relief rate of the battery cell 20.

The first groove 222 can also be of other structures; with reference to FIG. 9, the first groove 222 formed by the first groove section 2221, the second groove section 2222 and the third groove section 2223 jointly can be of a "U"-shaped structure, namely, one end of the second groove section 2222 is connected to one end of the first groove section 2221, and the other end of the second groove section 2222 is connected to one end of the third groove section 2223, thus forming one predetermined pressure relief region P on the pressure relief component 22.

In some embodiments, the first groove 222 further includes a fourth groove section 2224 which is arranged between the first groove section 2221 and the third groove section 2223 and is connected to the third groove section 2223, and one first weak section 2211 is formed at the corresponding area of the fourth groove section 2224.

Exemplarily, as shown in FIG. 17, the fourth groove section 2224 vertically intersects with the second groove section 2222. The fourth groove section 2224 extends in the width direction Z of the first wall portion. In the width direction Z of the first wall portion, the length of the fourth groove section 2224 is smaller than that of the first groove section 2221, and the length of the fourth groove section 2224 is smaller than that of the third groove section 2223.

One first weak section 2211 is formed on the groove bottom wall of the fourth groove section 2224. The groove bottom wall of the first groove section 2221, the groove bottom wall of the second groove section 2222, the groove bottom wall of the third groove section 2223 and the groove bottom wall of the fourth groove section 2224 jointly form the first weak portion 221 including four first weak sections 2211.

The fourth groove section 2224 is arranged to facilitate the rupturing of the pressure relief component 22 from the position in which the second groove section 2222 and the fourth groove section 2224 intersect with each other, so that two predetermined pressure relief regions P on the two sides of the second groove section 2222 can be synchronously opened, and the pressure relief rate is improved.

As shown in FIG. 17, in some embodiments, the first weak portion 221 defines two predetermined pressure relief regions P which are respectively positioned on the two sides of the second groove section 2222; the pressure relief component 22 further includes the second weak portion 228 which is configured to guide the predetermined pressure relief regions P to be opened when the first weak portion 221 ruptures, and each predetermined pressure relief region P is correspondingly provided with at least one second weak portion 228.

Each predetermined pressure relief region P can be correspondingly provided with one second weak portion 228 or a plurality of second weak portions 228.

Each second weak portion 228 is configured to guide the corresponding predetermined pressure relief region P to be overturned when the first weak portion 221 ruptures, so that the predetermined pressure relief region P is guided to be opened.

The second weak portion 228 can guide the corresponding predetermined pressure relief region P to be opened, and each predetermined pressure relief region P is correspondingly provided with at least one second weak portion 228, so that the opening effect of each predetermined pressure relief region P of the pressure relief component 22 can be improved, the pressure relief area of the battery cell 20 after the predetermined pressure relief region P is opened can be increased, furthermore, the pressure relief rate of the battery cell 20 in thermal runaway can be improved, thereby reducing the risks of fire explosion, connection failure and the like caused by untimely pressure relief of the battery cell 20, and improving the operational reliability of the battery cell 20.

In some embodiments, each predetermined pressure relief region P is correspondingly provided with one second weak portion 228; the pressure relief component 22 is provided with the second groove 225, the pressure relief component 22 forms the second weak portions 228 in the area provided with the second groove 225, and the first groove 222 is located between two second grooves 225.

The first weak portion 221 defines two predetermined pressure relief regions P, each predetermined pressure relief region P is correspondingly provided with one second weak portion 228, and the pressure relief component 22 is provided with two second grooves 225.

The extension direction of the second grooves 225 is parallel to the extension direction of the second groove section 2222 of the first groove 222. The two second grooves 225 are arranged at an interval in the extension direction of the first groove section 2221 of the first groove 222. The first groove section 2221 and the third groove section 2223 of the first groove 222 are located between the two second grooves 225, and the second groove section 2222 is located between the two second grooves 225, so that the first groove 222 is located between the two second grooves 225.

Each first groove 222 is located between the edge of the first wall portion 211 and the first groove 222 in the width direction Z of the first wall portion. The two first grooves 222 separate the edge of the first wall portion 211 from the first groove 222 on two sides of the first groove 222 in the width direction Z of the first wall portion respectively.

The first groove 222 is located between two second grooves 225, so that the second grooves 225 can also play a certain buffering role on the first groove 222, and when the battery cell 20 is subjected to internal and external impact force and is deformed, the deformation energy of the battery cell 20 can also be absorbed by the second grooves 225, thus achieving a certain protection role on the area provided with the first groove 222 of the pressure relief component 22, effectively reducing the phenomena of deformation or damage and the like of the area provided with the first groove 222 of the pressure relief component 22 when the battery cell 20 is subjected to internal and external impact force, and relieving the situation of premature actuation for pressure relief of the battery cell 20 in the use process.

In some embodiments, the second groove section 2222 and the second groove 225 are oppositely arranged in the first direction, and the first groove section 2221 and the third groove section 2223 are both arranged at intervals with the second groove 225 in the first direction.

The second groove section 2222 and the second groove 225 are oppositely arranged in the first direction, and the first groove section 2221 and the third groove section 2223 are both arranged at intervals with the second groove 225 in the first direction, so that the first groove section 2221, the second groove section 2222 and the third groove section 2223 are all not in contact with the second groove 225, thereby reducing the mutual influence of the first groove 222 and the second groove 225 in the processing process, reducing the phenomenon of rupturing of the second weak portion 228 caused by rupturing for pressure relief of the first weak portion 221, and reducing the stress influence between the first weak portion 221 and the second weak portion 228.

In some embodiments, the first wall portion 211 is of a rectangular structure, and the first direction is parallel to the width direction Z of the first wall portion.

That is, the first groove section 2221 and the third groove section 2223 extend in the width direction Z of the first wall portion, and the second groove 225 and the second groove section 2222 extend in the length direction Y of the first wall portion. The second grooves 225 and the second groove section 2222 are oppositely arranged at an interval in the width direction Z of the first wall portion.

The first direction is parallel to the width direction Z of the first wall portion, so that the second groove section 2222 and the second groove 225 are oppositely arranged in the width direction Z of the first wall portion; the first groove section 2221 and the third groove section 2223 are arranged at intervals with the second groove 225 in the width direction Z of the first wall portion, the first groove section 2221, the second groove section 2222 and the third groove section 2223 are all not in contact with the second groove 225 in the width direction Z of the first wall portion, thereby reducing the mutual influence of the first groove 222 and the second grooves 225 in the processing process, further reducing the phenomenon of rupturing of the second weak portion 228 caused by rupturing for pressure relief of the first weak portion 221, and further reducing the stress influence between the first weak portion 221 and the second weak portion 228.

In some embodiments, with reference to FIG. 10, the pressure relief component 22 and the first wall portion 211 are integrally formed.

That is, the pressure relief component 22 and the first wall portion 211 are of an integrated structure, and are arranged on the first wall portion 211 by an integrated forming process, namely, the pressure relief component 22 serves as the first wall portion 211, and the pressure relief component 22 is a part of the shell 21.

Exemplarily, in FIG. 10, if the first wall portion 211 is the bottom wall, opposite to the end cover 213, of the case 212 in the thickness direction X of the first wall portion, the pressure relief component 22 serves as the bottom wall, and the first groove 222 forming the first weak portion 221 is arranged in the bottom wall. If the first wall portion 211 is the end cover 213, the pressure relief component 22 is the end cover 213, so that the pressure relief component 22 can seal the opening 2121 of the case 212, and two electrode terminals 24 are both arranged on the pressure relief component 22.

The pressure relief component 22 and the first wall portion 211 are arranged to be of the integrally-formed structure, so that the pressure relief component 22 is of a structure integrated on the first wall portion 211, namely, the pressure relief component 22 serves as one wall of the shell 21, correspondingly, the pressure relief component 22 is arranged on the first wall portion 211; for the battery cell 20 with such structure, the structural strength of the pressure relief component 22 arranged on the first wall portion 211 can be improved, and the risk of liquid leakage caused by improper assembly of the pressure relief component 22 and the first wall portion 211 can be reduced.

In some embodiments, the materials of the pressure relief component 22 include aluminum alloy.

It is to be understood that in an embodiment where the pressure relief component 22 and the first wall portion 211 are integrally formed, the materials of the first wall portion 211 include aluminum alloy. If the first wall portion 211 is the end cover 213, the end cover 213 can be made of aluminum alloy; and if the first wall portion 211 is the wall portion in the case 212, the case 212 can be made of aluminum alloy.

The aluminum alloy has the characteristics of light weight and good ductility, so it is easier to process the first groove 222 in the pressure relief component 22. In an embodiment where the pressure relief component 22 and the first wall portion 211 are integrally formed, the first wall portion 211 is made of aluminum alloy, and thus the forming difficulty of the first wall portion 211 can be effectively reduced.

In some embodiments, the aluminum alloy includes the following components in percentage by mass: greater than or equal to 99.6% of aluminum, less than or equal to 0.05% of copper, less than or equal to 0.35% of iron, less than or equal to 0.03% of magnesium, less than or equal to 0.03% of manganese, less than or equal to 0.25% of silicon, less than or equal to 0.03% of titanium, less than or equal to 0.05% of vanadium, less than or equal to 0.05% of zinc and less than or equal to 0.03% of other single elements.

Such aluminum alloy belongs to three-series aluminum, is lower in hardness and has better forming capacity, so the processing difficulty of the first groove 61 and thee second groove 62 is reduced, the processing precision of the first groove 61 and the second groove 62 is improved, and the pressure relief consistency of the pressure relief component 6 is improved.

In some embodiments, the aluminum alloy includes the following components in percentage by mass: greater than or equal to 96.7% of aluminum, greater than or equal to 0.05% and less than or equal to 0.2% of copper, less than or equal to 0.7% of iron, less than or equal to 1.5% of manganese, less than or equal to 0.6% of silicon, less than or equal to 0.1% of zinc, less than or equal to 0.05% of other single elements and less than or equal to 0.15% of total components of other element.

Such as aluminum alloy belongs to five-series aluminum, and the pressure relief component 22 made of such aluminum alloy is higher in hardness, higher in strength and good in damage resistance.

As shown in FIG. 4, in some embodiments, the pressure relief component 22 and the first wall portion 211 are arranged in a split manner, the first wall portion 211 is provided with the pressure relief holes, and the pressure relief component 22 is installed on the wall and covers the pressure relief holes.

The pressure relief holes penetrate through two sides of the first wall portion in the thickness direction X and are in communication with the interior of the shell 21.

The pressure relief component 22 and the first wall portion 211 are arranged in a split manner, namely, the pressure relief component 22 and the first wall portion 211 are two split components before being assembled; and in a case of assembling the pressure relief component 22 and the first wall portion 211, it is needed to connect the pressure relief component 22 and the first wall portion 211 as a whole. The pressure relief component 22 can be connected to the hole walls of pressure relief holes and cover the pressure relief holes, exemplarily, the pressure relief component 22 is connected to the first wall portion 211.

The pressure relief component 22 and the first wall portion 211 are arranged in a split way, so that the pressure relief component 22 is of a structure mounted on the first wall portion 211; and for the battery cell 20 with such structure, the difficulty of arranging the pressure relief component 22 on the first wall portion 211 can be reduced, and the processing procedures of the shell 21 and the processing procedures of the pressure relief component 22 can be synchronously carried out, thereby being conducive to optimizing the production rate of the battery cell 20.

In some embodiments, the battery cell 20 includes the electrode assembly 23 which is accommodated in the shell 21, and the first wall portion 211 supports the electrode assembly 23.

The battery cell 20 can include one or more electrode assemblies 23. In an embodiment where the battery cell 20 includes a plurality of electrode assemblies 23, the plurality of electrode assemblies 23 are arranged in a stacked manner in the thickness direction.

The first wall portion 211 supports the electrode assemblies 23, and it is to be understood that the first wall portion 211 bears the weight of the electrode assemblies 23.

The first wall portion 211 supports the electrode assemblies 23, and the pressure relief component 22 is arranged on the first wall portion 211, so that the risk that substances released when the battery cell 20 is subjected to pressure relief act on other electrical connection structures can be reduced, thereby reducing the risk of causing other reliability problems.

In some embodiments, the battery cell 20 includes the electrode terminal 24 which is arranged on a wall portion, other than the first wall portion 211, of the shell 21.

The electrode terminal 24 is arranged on a wall, other than the first wall portion 211, of the shell 21, namely, the electrode terminal 24 and the pressure relief component 22 are arranged on different wall portions of the shell 21.

The electrode terminal 24 is arranged on a wall portion, other than the first wall portion 211, of the shell 21, so that the risk that substances released during pressure relief of the battery cell 20 act on the electrode terminal 24 is relatively low, and the risk that the battery cell 20 is short-circuited to cause thermal runaway of the battery cell 20 again due to that the substances released during pressure relief of the battery cell 20 act on the electrode terminal 24 to cause electric connection can be reduced.

In some embodiments, the electrode terminal 24 is arranged on the wall portion, opposite to the first wall portion 211, of the shell 21.

Exemplarily, the case 212 of the shell 21 is provided with the bottom wall opposite to the opening 2121, and the end cover 213 covers the opening 2121 and is arranged opposite to the bottom wall. If the bottom wall serves as the first wall portion 211, the electrode terminal 24 is arranged on the end cover 213 that covers the opening 2121.

The electrode terminal 24 is arranged on the wall portion, opposite to the first wall portion 211, of the shell 21, so that the distance from the electrode terminal 24 to the pressure relief component 22 is longer, the risk that the substances released during pressure relief of the battery cell 20 act on the electrode terminal 24 can be further reduced, and furthermore, the risk that the battery cell 20 is short-circuited to cause thermal runaway of the battery cell 20 again due to that the substances released during pressure relief of the battery cell 20 act on the electrode terminal 24 to cause electric connection can be reduced.

In some embodiments, the shell 21 includes the case 212 and the end cover 213; the case 212 is provided with at least one opening 2121; the end cover 213 is in one-to-one correspondence with the opening 2121, is connected to the case 212 and covers the opening 2121; and at least one end cover 213 is the first wall portion 211.

The end cover 213 is the first wall portion 211, namely, the pressure relief component 22 is arranged on the end cover 213. In an embodiment where the case 212 is provided with two opposite openings 2121, the shell 21 includes two end covers 213; one of the two end covers 213 can be the first wall, namely, one end cover 213 is provided with the pressure relief component 22, or the two end covers 213 can be the first walls, namely, the two end covers 213 are provided with the pressure relief components 22.

The first wall portion 211 of the shell 21 is arranged as the end cover 213 of the shell 21 for sealing the opening 2121; and for the battery cell 20 with such structure, the pressure relief component 22 is conveniently arranged on the end cover 213, so that the manufacturing difficulty of the battery cell 20 is reduced, and the production efficiency of the battery cell 20 is improved.

It is to be noted that the structure of the battery cell 20 is not limited to this, and in some embodiments, the battery cell 20 can also be other structures, for example, with reference to FIG. 3 and FIG. 4, the shell 21 can include the case 212 and the end cover 213; an accommodating cavity with an opening 2121 is formed in the case 212 and is used for accommodating the electrode assembly 23, the end cover 213 seals the opening 2121, and the case 212 includes the first wall portion 211.

The case 212 can include the side wall and the bottom wall which are integrally formed, namely the case 212 is processed by the integral forming process, such as stamping, casting or extrusion forming, that is, the side wall and the bottom wall of the case 212 are of an integrated structure.

The case 212 includes the first wall portion 211, namely the first wall portion 211 is one wall in the case 212, and exemplarily, in FIG. 10, the first wall portion 211 is the bottom wall, opposite to the end cover 213, of the case 212 in the thickness direction X of the first wall portion. Definitely, in some other embodiments, the first wall portion 211 can also be the side wall of the case 212.

The first wall portion 211 of the shell 21 is arranged as one wall of the case 212, and for the battery cell 20 with such the structure, the area provided with the pressure relief component 22 of the shell 21 can be far away from the end cover 213, so that the phenomenon that stress generated by interconnection of the end cover 213 and the case 212 acts on the pressure relief component 22 can be effectively relieved, the influence on the predetermined pressure relief region P and the first weak portion 221 of the pressure relief component 22 is reduced, furthermore, the risk that the pressure relief component 22 ruptures or the structural strength is reduced under the pulling action of the stress is reduced, the service life of the battery cell 20 is prolonged, and the operational reliability of the battery cell 20 is improved.

It is to be noted that the battery cell 20 can be of various structures, in some embodiments, the case 212 is provided with two openings 2121 which are oppositely arranged; and the shell 21 includes two end covers 213, each end cover 213 is connected to the case 212 and seals one opening 2121, and the case 212 includes the first wall portion 211.

The accommodating cavity is formed in the case 212, and the two openings 2121 are in communication with the accommodating cavity. The two openings 2121 can be oppositely arranged in the thickness direction X of the first wall portion. In an embodiment where the shell 21 includes the two openings 2121 and the two end covers 213, the first wall portion 211 can also be one wall of the case 212.

The case 212 of the shell 21 is provided with the two openings 2121 which are oppositely arranged, the two end covers 213 seal the two openings 2121 respectively; for the battery cell 20 with such structure, it is conveniently assembled from the two ends of the case 212 respectively, and the manufacturing difficulty and the assembling difficulty of the battery cell 20 can be reduced. The case 212 includes the first wall portion 211, the pressure relief component 22 is not arranged on the end cover 213, so that the risk that substances released when the battery cell 20 is subjected to pressure relief act on other structures of the battery 100 can be reduced, and furthermore, the risk that the battery cell 20 is short-circuited to cause thermal runaway of the battery cell 20 again due to that the substances released during pressure relief of the battery cell 20 act on the electrode terminal 24 to cause electric connection can be reduced.

In an embodiment where the shell 21 includes the two openings 2121 and the two end covers 213, the two end covers 213 seal the two openings 2121 respectively, and one of the end cover 213 is the first wall portion 211. Definitely, the two end covers 213 can also be the first wall portions 211, and each first wall portion 211 is provided with the pressure relief component 22.

In some embodiments, the case 212 is provided with one opening 2121, and the wall portion, opposite to the opening 2121, of the case 212 is the first wall portion 211.

Exemplarily, the wall portion, opposite to the opening 2121, of the case 212 is the bottom wall of the shell 212, and the bottom wall is the first wall portion 211; the end cover 213 is arranged opposite to the first wall portion 211, and the electrode terminal 24 is arranged on the end cover 213.

The wall portion, opposite to the opening 2121, of the case 212 is the first wall portion 211, so that the risk that the substances released when the battery cell 20 is subjected to pressure relief act on other structures of the battery 100 can be reduced, and furthermore, the risk that the battery cell 20 is short-circuited to cause thermal runaway of the battery cell 20 again due to that the substances released during pressure relief of the battery cell 20 act on the electrode terminal 24 to cause electric connection can be reduced.

In some embodiments, the materials of the pressure relief component 22 include a steel material.

The steel material can be carbon steel, alloy steel, stainless steel and the like.

It is to be understood that in an embodiment where the pressure relief component 22 and the first wall portion 211 are integrally formed, the materials of the first wall portion 211 include the steel material. If the first wall portion 211 is the end cover 213, the end cover 213 can be made of the steel material; and if the first wall portion 211 is the wall portion in the case 212, the case 212 can be made of the steel material.

In the embodiments, the steel material has the characteristic of high strength, so the pressure relief component 22 made of the steel material has better strength, and under the condition that the bursting pressure of the battery cell 20 is certain, the pressure relief component 22 can be made thinner, so that the size of the pressure relief component 22 is reduced. In an embodiment where the pressure relief component 22 and the first wall portion 211 are integrally formed, the first wall portion 211 is made of the steel material, the first wall portion 211 can be made thinner, and under the condition that the size of the shell 21 is certain, the size of the shell 21 can be increased, so that more space is provided for the electrode assembly 23, and the volume energy density of the battery cell 20 can be improved.

In some embodiments, the steel material is carbon steel or stainless steel.

The carbon steel can be low-carbon steel, medium-carbon steel or high-carbon steel.

In some embodiments, the materials of the pressure relief component 22 include aluminum alloy.

It is to be understood that in an embodiment where the pressure relief component 22 and the first wall portion 211 are integrally formed, the materials of the first wall portion 211 include aluminum alloy. If the first wall portion 211 is the end cover 213, the end cover 213 can be made of aluminum alloy; and if the first wall portion 211 is the wall portion in the case 212, the case 212 can be made of aluminum alloy.

The aluminum alloy has the characteristics of light weight and good ductility, so it is easier to process the first groove 222 and the second groove 225 in the pressure relief component 22. In an embodiment where the pressure relief component 22 and the first wall portion 211 are integrally formed, the first wall portion 211 is made of aluminum alloy, and thus the forming difficulty of the first wall portion 211 can be effectively reduced. Because the aluminum alloy has good ductility, it is easier to stack in the predetermined pressure relief region P when forming the first groove 222.

In some embodiments, the present application further provides a battery 100 which includes the battery cell 20 provided by any of the above embodiments.

With reference to FIG. 2, the battery 100 can further include a box body 10, and the battery cell 20 is accommodated in the box body 10.

In some embodiments, the box body 10 may include a first box body 11 and a second box body 12. The first box body 11 and the second box body 12 cover each other, and the first box body 11 and the second box body 12 together define an assembling space for accommodating the battery cell 20.

Optionally, the second box body 12 may be of a hollow structure with an open end, the first box body 11 may be of a plate-like structure, and the first box body 11 covers the open side of the second box body 12, so that the first box body 11 and the second box body 12 together define the assembling space. Both the first box body 11 and the second box body 12 may also be of a hollow structure with an open side, and the open side of the first box body 11 covers the open side of the second box body 12.

Of course, the box body 10 formed by the first box body 11 and the second box body 12 may be in various shapes, such as a cylinder or a cuboid. Exemplarily, in FIG. 2, the box body 10 is of a cuboid structure.

Optionally, one battery cell 20 or a plurality of battery cells 20 may be arranged in the box body 10. Exemplarily, in FIG. 2, a plurality of battery cells 20 are arranged in the box body 10 of the battery 100, and the plurality of battery cells 20 can be connected in series or in parallel or in series-parallel connection; series-parallel connection refers to that the plurality of battery cells 20 are connected in series and in parallel. The plurality of battery cells 20 can be directly connected in series or in parallel or in series-parallel connection, and then the whole body formed by the plurality of battery cells 20 is accommodated in the box body 10; definitely, the battery 100 can also be in a form of a battery module formed by connecting the plurality of battery cells 20 in series or in parallel or in series-parallel connection; and a plurality of batteries 100 modules are connected in series or in parallel or in series-parallel connection as a whole and are accommodated in the box body 10.

The battery 100 may further include other structures. For example, the battery 100 may further include a convergence component, and the plurality of battery cells 20 can be connected through the convergence component so as to realize the electrical connection between the plurality of battery cells 20.

It is to be noted that in some embodiments, the battery 100 can be not provided with the box body 10, the battery 100 includes the plurality of battery cells 20, and the battery 100 composed of the battery cells 20 can be directly assembled on an electrical device so as to provide electric energy for the electric device through the battery cells 20. That is, the box body 10 can serve as a part of the electrical device. Taking the vehicle 1000 serving as the electrical device as an example, the box body 10 can serve as a part of a chassis structure of the vehicle 1000, for example, the part of the box body 10 can serve as at least one part of a floor of the vehicle 1000, or the part of the box body 10 can serve as at least one part of a cross beam and a longitudinal beam of the vehicle 1000.

In some embodiments, the application further provides an electrical device which includes the battery cell 20 provided by any of the above embodiments.

The battery cell 20 is used for providing electric energy for the electrical device. The electrical device can be any device or system applying the battery cell 20.

The present application provides the battery cell 20 which includes the shell 21, the electrode assembly 23 and the pressure relief component 22. The shell 21 is provided with the first wall portion 211; the shell 21 includes the case 212 and the end cover 213; the accommodating cavity with the opening 2121 is formed in the case 212, and the electrode assembly 23 is accommodated in the accommodating cavity; and the end cover 213 seals the opening 2121, and the end cover 213 is the first wall portion 211. The pressure relief component 22 and the first wall portion 211 are of split structures; and the pressure relief component 22 is arranged on the first wall portion 211.

In the thickness direction X of the first wall portion, the pressure relief component 22 is provided with the first surface 223 and the second surface 224 which are oppositely arranged, the first surface 223 is located on the side, deviating from the interior of the shell 21, of the pressure relief component 22, and the second surface 224 is located on the side, facing the interior of the shell 21, of the pressure relief component 22. Three stages of score grooves are formed in the first surface 223 of the pressure relief component 22, and are sequentially arranged from the first surface 223 to the second surface 224; the stage of score groove, farthest away from the first surface 223, in the three stages of score grooves is the first groove 222; and the first weak portion 221 is formed at the corresponding area of the first groove 222. The first weak portion 221 defines at least one predetermined pressure relief region P; and the pressure relief component 22 is configured to be capable of rupturing along at least part of the first weak portion 221 when the battery cell 20 is subjected to pressure relief. The first weak portion 221 includes a plurality of first weak sections 2211. The second groove 225 is formed in the second surface 224; the pressure relief component 22 forms the second weak portion 228 at the corresponding area of the second groove 225; in the thickness direction X of the first wall portion, the thickness of the second weak portion 228 is greater than that of the first weak portion 221; and the second weak portion 228 is configured to guide the predetermined pressure relief region P to overturn when the first weak portion 221 ruptures so as to relieve the pressure inside the battery cell 20.

The first groove 222 includes the first groove section 2221, the second groove section 2222, the third groove section 2223 and the fourth groove section 2224. Each of the first groove section 2221, the second groove section 2222, the third groove section 2223 and the fourth groove section 2224 forms one first weak section 2211. In the length direction Y of the first wall portion, the first groove section 2221 and the third groove section 2223 are oppositely arranged at an interval. The first groove section 2221 and the third groove section 2223 both extend in a straight line in the width direction Z of the first wall portion. The third groove section 2223 extends in a straight line in the length direction Y of the first wall portion. The second groove section 2222 is connected to the first groove section 2221 and the third groove section 2223. The position in which the second groove section 2222 is connected to the first groove section 2221 is between two ends of the first groove section 2221, and the position in which the second groove section 2222 is connected to the third groove section 2223 is between two ends of the third groove section 2223. The first groove section 2221, the second groove section 2222 and the third groove section 2223 form the H-shaped first groove 222. In the width direction Z of the first wall portion, one predetermined pressure relief region P is formed on each of two sides of the second groove section 2222. The first weak portion 221 defines two predetermined pressure relief regions P. The fourth groove section 2224 is located between the first groove section 2221 and the third groove section 2223, and the fourth groove section 2224 intersects with the second groove section 2222.

In the width direction Z of the first wall portion, the size of the first wall portion 211 is W, the first weak portion 221 includes at least one first weak section 2211, the area of the cross section, perpendicular to the extension direction, of the first weak section 2211 is S₁, and the followings are met: 10mm≤W≤100mm, and 0.006mm2≤S₁≤0.15mm2; and preferably, 20mm≤W≤80mm, 0.01mm2≤S₁≤0.1mm2. The width of the groove bottom surface of the groove section is A, the thickness of the first weak section 2211 is H, and A and H meet: S₁=A×H ; 0.05mm≤A≤0.5mm, and 0.05mm≤H≤0.6mm; and preferably, 0.1mm≤A≤0.3mm, 0.08mm≤H≤0.4mm.

According to some embodiments of the present application, with reference to FIG. 3 to FIG. 4, the present application provides the battery cell 20 which includes the shell 21, the electrode assembly 23 and the pressure relief component 22. The shell 21 is provided with the first wall portion 211, and includes the case 212 and the end cover 213; the accommodating cavity with the opening 2121 is formed in the case 212, the electrode assembly 23 is accommodated in the accommodating cavity, and the end cover 213 seals the opening 2121; and the bottom wall, opposite to the end cover 213, of the case 212 in the thickness direction X of the first wall portion is the first wall portion 211. The pressure relief component 22 and the first wall portion 211 are of an integrally formed structure, namely the pressure relief component 22 is the first wall portion 211 of the shell 21.

In the thickness direction X of the first wall portion, the pressure relief component 22 is provided with the first surface 223 and the second surface 224 which are oppositely arranged, the first surface 223 is located on the side, deviating from the interior of the shell 21, of the pressure relief component 22, and the second surface 224 is located on the side, facing the interior of the shell 21, of the pressure relief component 22. Three stages of score grooves are formed in the first surface 223 of the pressure relief component 22, and are sequentially arranged from the first surface 223 to the second surface 224; the stage of score groove, farthest away from the first surface 223, in the three stages of score grooves is the first groove 222; and the first weak portion 221 is formed at the corresponding area of the first groove 222. The first weak portion 221 defines at least one predetermined pressure relief region P; and the pressure relief component 22 is configured to be capable of rupturing along at least part of the first weak portion 221 when the battery cell 20 is subjected to pressure relief. The first weak portion 221 includes a plurality of first weak sections 2211. The second groove 225 is formed in the second surface 224; the pressure relief component 22 forms the second weak portion 228 at the corresponding area of the second groove 225; in the thickness direction X of the first wall portion, the thickness of the second weak portion 228 is greater than that of the first weak portion 221; and the second weak portion 228 is configured to guide the predetermined pressure relief region P to overturn when the first weak portion 221 ruptures so as to relieve the pressure inside the battery cell 20.

The first groove 222 includes the first groove section 2221, the second groove section 2222, the third groove section 2223 and the fourth groove section 2224. Each of the first groove section 2221, the second groove section 2222, the third groove section 2223 and the fourth groove section 2224 forms one first weak section 2211. In the length direction Y of the first wall portion, the first groove section 2221 and the third groove section 2223 are oppositely arranged at an interval. The first groove section 2221 and the third groove section 2223 both extend in a straight line in the width direction Z of the first wall portion. The third groove section 2223 extends in a straight line in the length direction Y of the first wall portion. The second groove section 2222 is connected to the first groove section 2221 and the third groove section 2223. The position in which the second groove section 2222 is connected to the first groove section 2221 is between two ends of the first groove section 2221, and the position in which the second groove section 2222 is connected to the third groove section 2223 is between two ends of the third groove section 2223. The first groove section 2221, the second groove section 2222 and the third groove section 2223 form the H-shaped first groove 222. In the width direction Z of the first wall portion, one predetermined pressure relief region P is formed on each of two sides of the second groove section 2222. The first weak portion 221 defines two predetermined pressure relief regions P. The fourth groove section 2224 is located between the first groove section 2221 and the third groove section 2223, and the fourth groove section 2224 intersects with the second groove section 2222.

In the width direction Z of the first wall portion, the size of the first wall portion 211 is W, the first weak portion 221 includes at least one first weak section 2211, the area of the cross section, perpendicular to the extension direction, of the first weak section 2211 is S₁, and the followings are met: 10mm≤W≤100mm, and 0.006mm2≤S₁≤0.15mm2; and preferably, 20mm≤W≤80mm, 0.01mm2≤S₁≤0.1mm2. The width of the bottom surface of the first groove 222 is A, the thickness of the first weak section 2211 is H, and A and H meet: S₁=A×H; 0.05mm≤A≤0.5mm, 0.05mm≤H≤0.6mm; and preferably, 0.1mm≤A≤0.3mm, and 0.08mm≤H≤0.4mm.

The foregoing is only a preferred embodiment of the present application and is not intended to limit the present application, which may be subject to various changes and variations for those skilled in the art. Any modification, equivalent replacement, improvement, etc. made within the spirit and principle of the present application shall fall within the scope of protection of the present application.

## Claims

1. A battery cell, comprising:
a shell comprising a first wall portion; and
a pressure relief component which is arranged on the first wall portion and comprises a first weak portion that defines at least one predetermined pressure relief region, the pressure relief component being configured to be capable of rupturing along at least part of the first weak portion when the battery cell is subjected to pressure relief; wherein
in the width direction of the first wall portion, the size of the first wall portion is W, the first weak portion comprises at least one first weak section, and the area of the cross section, perpendicular to an extension direction, of the first weak section is S1, the followings are met: 10mm≤W≤100mm, 0.006mm²≤S₁≤0.15mm².

2. The battery cell according to claim 1, wherein 20mm≤W≤80mm, 0.01mm²≤S₁≤0.1mm₂.

3. The battery cell according to any one of claims 1 to 2, wherein the pressure relief component is provided with a first groove which comprises at least one groove section, the pressure relief component forms at least one first weak section in an area provided with the groove section, the width of the groove bottom surface of the groove section is A and the unit is mm, and the thickness of the first weak section is H and the unit is mm, which meet: the area S₁ of the cross section, perpendicular to the extension direction, of the first weak section is the product of the width A of the groove bottom surface of the groove section and the thickness H of the first weak section; 0.1mm≤A≤0.3mm, 0.06mm≤H≤0.5mm; and optionally, 0.15mm≤A≤0.25mm, and 0.1mm≤H≤0.3mm.

4. The battery cell according to claim 3, wherein the pressure relief component is provided with a first surface and a second surface which are oppositely arranged in the thickness direction of the first wall portion, the first groove is in a form of multi-stage score grooves, the multi-stage score grooves are sequentially arranged in the direction from the first surface to the second surface; and in two adjacent stages of score grooves, one stage of score groove far away from the first surface is arranged on the groove bottom surface of one stage of score groove close to the first surface.

5. The battery cell according to claim 4, wherein the first groove comprises three stages of score grooves, and the three stages of score grooves are sequentially arranged in the direction from the first surface to the second surface.

6. The battery cell according to any one of claims 1 to 5, wherein the pressure relief component further comprises a second weak portion which is configured to guide the predetermined pressure relief region to be opened.

7. The battery cell according to claim 6, wherein the pressure relief component is provided with a second groove, and the pressure relief component forms the second weak portion in the area provided with the second groove.

8. The battery cell according to claim 7, wherein the second groove is formed in the surface, facing the interior of the shell, of the pressure relief component.

9. The battery cell according to any one of claims 6 to 8, wherein the pressure relief component is provided with the first surface and the second surface which are oppositely arranged in the thickness direction of the first wall portion; the first groove is formed in the first surface; the pressure relief component forms the first weak portion in the area provided with the first groove; the second groove is formed in the second surface; and the pressure relief component forms the second weak portion in the area provided with the second groove.

10. The battery cell according to claim 9, wherein the first surface is a surface, deviating from the interior of the shell, of the pressure relief component, and the second surface is a surface, facing the interior of the shell, of the pressure relief component.

11. The battery cell according to any one of claims 7 to 10, wherein in the thickness direction of the first wall portion, the projection of the first groove is not in contact with the projection of the second groove.

12. The battery cell according to any one of claims 1 to 11, wherein the pressure relief component is provided with the first groove, and the pressure relief component forms the first weak portion in the area provided with the first groove; and
the first groove comprises a first groove section and a second groove section which are interconnected, the pressure relief component forms the first weak section in the area of the first groove section, and the pressure relief component forms the first weak section at the corresponding area of the second groove section.

13. The battery cell according to claim 12, wherein the first groove comprises a third groove section, the first groove section and the third groove section are oppositely arranged, the second groove section is connected to the first groove section and the third groove section, and the pressure relief component forms the first weak section at the corresponding area of the third groove section.

14. The battery cell according to claim 13, wherein the position in which the second groove section is connected to the first groove section deviates from two ends of the first groove section, and the position in which the second groove section is connected to the third groove section deviates from two ends of the third groove section.

15. The battery cell according to claim 13 or 14, wherein the two predetermined pressure relief regions are defined by the first weak portion, and are respectively located on the two sides of the second groove section; and
the pressure relief component further comprises the second weak portion which is configured to guide the predetermined pressure relief regions to be opened when the first weak portion ruptures, and each predetermined pressure relief region is correspondingly provided with at least one second weak portion.

16. The battery cell according to claim 15, wherein each predetermined pressure relief region is correspondingly provided with one second weak portion;
the pressure relief component is provided with second grooves, the pressure relief component forms the second weak portion in the areas provided with the second grooves, and the first groove is located between the two second grooves.

17. The battery cell according to claim 16, wherein the second groove section and the second grooves are oppositely arranged in a first direction, and the first groove section and the third groove section are both arranged at intervals with the second grooves in the first direction.

18. The battery cell according to claim 17, wherein the first wall portion is of a rectangular structure, and the first direction is parallel to the width direction of the first wall portion.

19. The battery cell according to any one of claims 1 to 18, wherein the pressure relief component and the first wall portion are integrally formed.

20. The battery cell according to any one of claims 1 to 18, wherein the pressure relief component and the first wall portion are arranged in a split manner; pressure relief holes are formed in the first wall portion; and the pressure relief component is arranged on the wall portion and covers the pressure relief holes.

21. The battery cell according to any one of claims 1 to 20, wherein the battery cell comprises an electrode assembly which is accommodated in the shell, and the first wall portion supports the electrode assembly.

22. The battery cell according to any one of claims 1 to 21, wherein the battery cell comprises an electrode terminal which is arranged on a wall portion, other than the first wall portion, of the shell.

23. The battery cell according to claim 22, wherein the electrode terminal is arranged on the wall portion, opposite to the first wall portion, of the shell.

24. The battery cell according to any one of claims 1 to 23, wherein the shell comprises:
a case which is provided with at least one opening; and
end covers are which are in one-to-one correspondence with the openings, are connected to the case and seal the openings; and
at least one end cover is the first wall portion, or the case comprises the first wall portion.

25. The battery cell according to claim 24, wherein the shell is provided with two openings which are oppositely arranged; and the shell comprises two end covers, each end cover is connected to the shell and seals one opening, and the shell comprises the first wall portion.

26. The battery cell according to claim 24, wherein the case is provided with one opening, and the wall portion, arranged opposite to the opening of the case is the first wall portion.

27. The battery cell according to any one of claims 1 to 26, wherein the materials of the pressure relief component comprise a steel material.

28. The battery cell according to claim 27, wherein the steel material is carbon steel or stainless steel.

29. A battery, comprising the battery cell according to any one of claims 1 to 28.

30. An electrical device, comprising the battery cell according to any one of claims 1 to 28.
